(19) Europäisches Patentamt
European Patent Office
Office européen des brevets

(11) **EP 3 911 530 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **21704171.4**

(22) Anmeldetag: **11.01.2021**

(51) Internationale Patentklassifikation (IPC):
***B60J 10/70*** (2016.01)

(52) Gemeinsame Patentklassifikation (CPC):
**B29C 48/13; B29C 48/0014; B29C 48/16; B29C 48/21; B60J 10/70**

(86) Internationale Anmeldenummer:
**PCT/DE2021/100014**

(87) Internationale Veröffentlichungsnummer:
**WO 2021/143977 (22.07.2021 Gazette 2021/29)**

(54) **NUTLEISTE UND VERFAHREN ZUR HERSTELLUNG**

GROOVE STRIP AND METHOD FOR PRODUCING SAME

BANDE DE RAINURE ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **14.01.2020 DE 102020000162**

(43) Veröffentlichungstag der Anmeldung:
**24.11.2021 Patentblatt 2021/47**

(73) Patentinhaber: **Elkamet Kunststofftechnik GmbH**
**35216 Biedenkopf (DE)**

(72) Erfinder:
• **LANDECK, David**
**57319 Bad Berleburg (DE)**
• **VAUPEL, Yannik**
**35232 Dautphetal (DE)**
• **SCHNEIDER, Timo**
**35719 Angelburg (DE)**
• **KUNKEL, Dirk**
**57319 Bad Berleburg (DE)**

(56) Entgegenhaltungen:
**CN-B- 104 890 483      CN-B- 104 890 483**
**DE-A1-102017 128 971   JP-A- 2015 157 527**
**JP-A- 2015 157 527     JP-A- 2015 205 656**
**JP-A- 2015 205 656**

• **Bison Profab: "Thixotropic Polyurethane Pour-In Place Seamless Gasket System", , 31 July 2014 (2014-07-31), XP055978880, Retrieved from the Internet: URL:https://www.youtube.com/watch?v=Of8u8Z 0Nkv8 [retrieved on 2022-11-08]**

**Beschreibung**

Die vorliegende Erfindung betrifft eine Nutleiste und ein Verfahren zu deren Herstellung.

Stand der Technik

Bei der Herstellung von Fahrzeugen wird üblicherweise zwischen Windschutzscheibe und Motorraum ein sogenannter Wasserkasten vorgesehen, um bei Regen auftretendes Wasser abzufangen und abzuleiten. Man ordnet üblicherweise Kunststoffprofilleisten mit einem Klemmkanal an der motorseitigen Windschutzscheibenkante an, um anschließend mittels des Klemmkanals eine Wasserkastenabdeckung zu montieren.

Derartige Profilleisten sind beispielsweise aus der DE 20 2008 013 133 U1 bekannt. Diese Druckschrift schlägt vor, zur Befestigung der Profilleiste an einer rückseitigen Oberfläche der Windschutzscheibe einen Verbindungsstreifen zu verwenden, der eine einfache, schnelle und kostengünstige Verbindung schaffen soll. Als Verbindungsstreifen kommt beispielsweise ein auch aus der DE 10 2012 112 663 A1 bekanntes doppelseitiges Klebeband in Betracht.

Die Schrift JP 2015 205656 A zeigt eine Profilleiste mit einem in den Rastkanal hineinragenden Bauteil, welches gegenüber der Rastverbindung angeordnet ist. Die Schrift JP 2015 157527 A offenbart eine Profilleiste mit einem elastischen Material im Klemmkanal. Die Schrift CN 104 890 483 B offenbart eine Profilleiste mit einem zusätzlichen Bauteil am Klemmschenkel.

Bei der vorstehend genannten Konstruktion sind die Klemmkanalenden beidseitig offen, das heißt es ist zumindest theoretisch ein seitlicher Wassereintritt in den Klemmkanal denkbar, insbesondere während schneller Fahrt bei starkem Regen. Zusätzlich kann die üblicherweise zwischen Windschutzscheibe und Wasserkastenabdeckung vorgesehene Weichlippenabdichtung, insbesondere unter den oben genannten Umständen, Undichtigkeiten aufweisen. Der Klemmkanal kann sich dabei mit Wasser füllen und es kann motorraumseitig zu einem unkontrollierten Abtropfen des Wassers kommen. Bei modernen Fahrzeugen wird der Motorraum in der Regel vollständig ausgenutzt, so dass bei Wassereintritt in den Motorraum insbesondere die unterhalb des Wasserkastens verbaute Sensorik und Elektronik beschädigt werden könnte.

Um dem vorzubeugen, ist es daher wünschenswert, eine alternative Lösung zu finden, welche die geschilderten Nachteile des Standes der Technik adressiert.

Offenbarung der Erfindung

Erfindungsgemäß wird eine Nutleiste sowie ein Verfahren zur Herstellung einer solchen Nutleiste vorgeschlagen gemäß Anspruch 1, bzw. 11.

Die Nutleiste dient zum Verbinden eines ersten Bauteils, vorzugsweise einer Windschutzscheibe, mit einem zweiten Bauteil, vorzugsweise einer Wasserkastenabdeckung. Sie umfasst einen sich entlang der Nutleiste erstreckenden Befestigungsabschnitt mit einem ersten, vorzugsweise weichelastischen, Auflageelement zur Anordnung zwischen dem ersten und dem zweiten Bauteil. Das erste Auflageelement liegt in einem Bereich, in dem beide Bauteile, mit oder ohne Spalt, aneinandergrenzen. Dabei können beide Bauteile oder nur eines der beiden Bauteile an dem ersten Auflageelement anliegen. Der Befestigungsabschnitt ist derart gestaltet, dass dieser an einem Bauteilkonturabschnitt des ersten Bauteils anordenbar ist, beispielsweise mittels eines doppelseitigen Klebebandes oder mittels einer Klebstoffraupe. Der Werkstoff des Befestigungsabschnittes (z.B. bevorzugt PP, PVC, ABS, PA oder dergleichen und/oder Kombinationen daraus, insbesondere ein extrudierbarer Hartkunststoff) ist härter als der Werkstoff des ersten Auflageelementes (z.B. TPE, insbesondere ein extrudierbarer Weichkunststoff). Realisierbar ist dies auch mittels unterschiedlicher Shorehärten.

Weiter umfasst ist ein sich entlang der Nutleiste erstreckender Einrastabschnitt mit einer an beiden Enden der Nutleiste offenen Rastnut zur Aufnahme einer vom zweiten Bauteil umfassten Rastrippe. Die Rastnut ist im Querschnitt der Nutleiste betrachtet gebildet aus zwei sich gegenüberliegenden Rastnutschenkeln und einem Rastnutboden, welcher beide Rastnutschenkel miteinander verbindet. Gegenüberliegend zum Rastnutboden ist ein Rastnuteingang vorgesehen. Der Querschnitt der Nutleiste ist eine Schnittebene durch die Nutleiste senkrecht zur deren Längsrichtung, der Richtung der längsten Ausdehnung der Nutleiste (entspricht bei extrudierten Nutleisten der Extrusionsrichtung), wobei die Längsrichtung bei zur Anpassung an die Unterkante einer Windschutzscheibe gebogenen Nutleisten einen gekrümmten Verlauf aufweisen kann. Der Einrastabschnitt verläuft parallel zum Befestigungsabschnitt und grenzt bevorzugt unmittelbar an diesen an. Dieser Grenzbereich umfasst auch bevorzugt das erste Auflageelement. Am Einrastabschnitt ist ein zweites Auflageelement bzw. Abdichtelement ausschließlich für das zweite Bauteil vorgesehen. Von der Rastnut ist mindestens ein, vorzugsweise weichelastisches, Rastelement (z.B. aus TPE) umfasst, mittels dessen die Rastrippe mit der Rastnut form- und/oder kraftschlüssig verrastbar oder zumindest festlegbar ist. Das zweite Bauteil, insbesondere die Rastrippe und/oder die Unterseite eines an die Rastrippe angrenzenden Bauteilabschnittes, liegt dabei am zweiten Auflageelement an, bevorzugt durchgehend, fest und wasserdicht. Der Werkstoff des Einrastabschnittes (z.B. bevorzugt PP, PVC, ABS, PA oder dergleichen und/oder Kombinationen daraus, insbesondere ein extrudierbarer Hartkunststoff) ist härter als der Werkstoff des zweiten Auflageelementes. Realisierbar ist dies beispielsweise auch mittels Verwendung von Kunststoffen unterschiedlicher Shorehärten, wobei die Härten des Befestigungsabschnittes und des Einrastabschnittes identisch sein können. Die Härten beider Auflageelemente sind jedoch vorzugsweise unterschiedlich, wobei das zweite Auflageelement vorzugsweise weicher als das erste Auflageelement ist und sich besonders bevorzugt auch im Material unterscheidet. Beispielsweise könnte das erste Auflageelement mittels eines thermoplastischen Elastomers (TPE) realisiert sein, während es sich bei dem zweiten Auflageelement um einen Schaumstoff oder einen vor oder während des Applizierens aufschäumenden bzw. aufgeschäumten Werkstoff wie bspw. Polyurethan (PUR) handelt.

Erfindungsgemäß wird auch ein Verfahren zur Herstellung einer Nutleiste gemäß Anspruch 11 bereitgestellt.

Mittels Extrusion oder Strangpressen wird dabei ein Profilstrang erzeugt. Der Profilstrang umfasst einen sich entlang des Profilstrangs erstreckenden Befestigungsabschnitt mit einem ersten Auflageelement für das erste und/oder das zweite Bauteil, welcher an einem Bauteilkonturabschnitt des ersten Bauteils anordenbar ist. Der Profilstrang umfasst auch einen sich entlang des Profilstrangs erstreckenden Einrastabschnitt. Der Einrastabschnitt wiederum umfasst eine Rastnut zur Aufnahme einer vom zweiten Bauteil umfassten Rastrippe. Am Einrastabschnitt wird außerdem ein zweites, vorzugsweise abdichtendes, Auflageelement für das zweite Bauteil vorgesehen. Zusätzlich wird an der Rastnut mindestens ein Rastelement vorgesehen, mittels dessen die Rastrippe mit der Rastnut form- und/oder kraftschlüssig verrastbar oder zumindest festlegbar ist. Die Dimensionierung und Realisierung erfolgt dabei derart, dass das zweite Bauteil am zweiten Auflageelement anliegt. Vorzugsweise liegt das zweite Bauteil zusätzlich am ersten Auflageelement an oder auf. Bei Erreichen einer vorgebbaren Profilstranglänge wird ein Profilstrangabschnitt vom Profilstrang, vorzugsweise mittels eines Schneide-, Säge-, oder Stanzvorgangs, abgetrennt. Bei diesem Profilabschnitt handelt es sich um die weiter oben beschriebene erfindungsgemäße Nutleiste mit einer an beiden Enden offenen Rastnut.

Vorteilhafte Ausgestaltungen sind Gegenstand der Unteransprüche sowie der nachfolgenden Beschreibung.

Vorteile der Erfindung

Der aus der erfindungsgemäßen Lösung resultierende Vorteil liegt darin, dass eine montagefreundliche Lösung bei gegenüber dem Stand der Technik verbesserter Wasserdichtigkeit zum Motorraum bereitgestellt wird. Zudem ist die Nutleiste effizient und kostengünstig mittels Extrusion oder Strangpressen in großen Stückzahlen herstellbar. Im Rahmen des Ersatzteilgeschäftes können außerdem bestehende unvorteilhafte Lösungen leicht umgerüstet werden, speziell im Rahmen eines Windschutzscheibentausches. Schäden an Motor und Elektronik wird somit vorgebeugt und Reparaturkosten werden vermieden bzw. reduziert.

Entlang des Einrastabschnittes ist vorzugsweise eine Aufnahmenut zur Aufnahme des zweiten Auflageelementes vorgesehen, innerhalb welcher das zweite Auflageelement zumindest mit einem Teil seines Querschnitts anordenbar ist und vorzugsweise angeordnet ist. Besonders bevorzugt wird eine Hinterschneidung innerhalb der Aufnahmenut vorgesehen, so kann eine Klemmwirkung realisiert werden, mittels derer das zweite Auflageelement innerhalb der Aufnahmenut werkzeugfrei und ohne weitere Befestigungsmittel einklemmbar ist. Das zweite Auflageelement ist dann außerdem auch leicht auswechselbar. Die Aufnahmenut kann bereits im Rahmen des Herstellverfahrens vorgesehen werden, indem das bei der Extrusion oder beim Strangpressen verwendete Werkzeug eine solche Nut am entstehenden Profilstrangquerschnitt vorsieht. Hierdurch werden Nachbearbeitungsschritte oder zusätzliche Prozessschritte vermieden und der Herstellprozess wird insgesamt kostengünstiger.

Die Aufnahmenut kann außerhalb (z.B. an einem Schenkelende der Rastnut und/oder auf einem Schenkelende der Rastnut) und/oder innerhalb der Rastnut (z.B. an einem Schenkel der Rastnut und/oder am Boden der Rastnut) angeordnet sein. Bei Anordnung von Aufnahmenut und zweitem Auflageelement innerhalb der Rastnut wirkt dieses bevorzugt zusammen mit der Rastrippe des zweiten Bauteils als motorseitige Abdichtung. Bei Anordnung von Aufnahmenut und zweitem Auflageelement außerhalb der Rastnut wirkt dies bevorzugt mit einer außerhalb der Rastnut vorhandenen Komponente des zweiten Bauteils als motorseitige Abdichtung. Auch eine Kombination der beiden zuvor genannten Erfindungsvarianten ist möglich, um einem potenziellen Wassereintritt im Motorraum proaktiv entgegenzuwirken.

Das zweite Auflageelement kann einen im Wesentlichen runden oder eckigen Querschnitt aufweisen. Bei Anordnung innerhalb einer Aufnahmenut wird ein im Wesentlichen runder Querschnitt bevorzugt, bei Anordnung außerhalb einer Aufnahmenut kann der Querschnitt bevorzugt auch von einer runden oder eckigen Form abweichen und beispielsweise einen ovalen Querschnitt aufweisen. Alternativ kann das zweite Auflageelement die Rastnut teilweise ausfüllen und einen Querschnitt aufweisen, der zumindest teilweise von der Kontur der Rastnut vorgegeben wird. Bei allen Querschnittsvarianten des zweiten Auflageelementes kann idealerweise gewährleistet sein, dass das zweite Auflageelement im Bereich des Einrastabschnittes, vorzugsweise entlang des, vorzugsweise gesamten, Einrastabschnittes, einen Zwischenraum zwischen dem zweiten Bauteil und dem Einrastabschnitt, vorzugsweise wasserdicht, verschließt oder zumindest das Eindringen und/oder Weiterleiten von Wasser/Spritzwasser über den Einrastabschnitt hinaus hemmt. Das zweite Auflageelement wird bevorzugt gleichzeitig mit dem Profilstrang hergestellt und/oder bei der Herstellung des Profilstrangs am Einrastabschnitt angeordnet. Hierdurch werden Nachbearbeitungsschritte oder zusätzliche Prozessschritte vermieden.

Im Rahmen der oben vorgestellten Lösungen wird bevorzugt ein zweites Auflageelement mittels eines Materials mit einer möglichst geschlossenen Materialstruktur realisiert, welche idealerweise geschlossenzellig, zumindest aber halbgeschlossenzellig, ist. Das Material sollte im Rahmen des erfindungsgemäßen Herstellverfahrens möglichst automatisiert am Einrastabschnitt, vorzugsweise stoffschlüssig, anordenbar sein. Die Aufbringung bzw. Anbringung des Materials kann während der Herstellung des Profilstrangs am durchgehenden Profilstrang und/oder nachgeschaltet erst an einem abgetrennten Profilstrangabschnitt erfolgen. Dabei kann das Material vor oder nach der Abtrennung an der Oberfläche des Einrastabschnittes aufgebracht werden, vorzugsweise innerhalb der Aufnahmenut. Geeignete Materialien für das zweite Auflageelement können beispielsweise der Kategorie der thermoplastischen Elastomere (TPE) bzw. der thermoplastischen Vulkanisate (TPV) zugeordnet sein, insbesondere kann es sich bei dem Material um Polyethylen (PE) und/oder um Ethylen-Propylen-Dien, M-Gruppe (EPDM) handeln.

Das zweite Auflageelement weist im unverformten Zustand idealerweise eine Materialdicke von 0,9 mm bis 5 mm auf, bevorzugt von 1,0 mm bis 3 mm, je nach gewählter Materialbreite und Materialzusammensetzung. Bevorzugt hat das Material eine schaumartige Konsistenz und wird bei Beaufschlagung mit einer Druckkraft zumindest teilweise elastisch verformt und dabei bevorzugt nur unwesentlich seitlich, d.h. quer zu einer Druckkraft, verdrängt.

Im Zuge der Montage des zweiten Bauteils an der Nutleiste wird (aus Sicht der als stationär angenommenen Nutleiste) das zweite Bauteil in einer Montagerichtung zunächst so weit an die Nutleiste angenähert, bis das zweite Bauteil, insbesondere mit einer der Nutleiste zugewandten Unterseite oder mit seiner Rastrippe, an dem zweiten Auflageelement anliegt. Damit die Rastrippe mit dem Rastelement der Rastnut in Eingriff kommen kann, wird das zweite Bauteil weiter in Montagerichtung an die Nutleiste angenähert, wobei das zweite Auflageelement zumindest abschnittweise eine Kompression erfährt. Das zweite Auflageelement wird dabei bevorzugt zumindest teilweise elastisch verformt. Nachdem zwischen dem Rastelement der Rastnut und der Rastrippe ein Eingriff hergestellt ist, kann ausgehend von einem dann erreichten Zwischenzustand, der mit einer maximalen Kompression des zweiten Auflageelements einhergeht, ein elastisches Rückfedern des zweiten Auflageelements dazu führen, dass sich das zweite Bauteil wieder geringfügig entgegen der Montagerichtung zurückbewegt, bis ein endgültiger Montagezustand erreicht ist, in welchem das zweite Bauteil mit der Nutleiste gefügt ist und das zweite Auflageelement komprimiert ist. Die Kompression des zweiten Auflageelements im Montagezustand kann geringer sein als die Kompression, die in dem im Zuge der Montage nur temporär durchlaufenen Zwischenzustand vorliegt.

Die zuvor genannte Kompression des zweiten Auflageelements wird hier verstanden als der Quotient aus einer Differenz einer Materialdicke des zweiten Auflageelements im unverformten Ausgangszustand und einer Materialdicke in einem komprimierten Zustand einerseits und der Materialdicke im unverformten Ausgangszustand andererseits. Die jeweiligen Materialdicken werden dabei in dem Bereich oder Abschnitt des zweiten Auflageelements ermittelt, in welchem die Differenz der Materialdicken maximal ist. Die Kompression des zweiten Auflageelements im Zuge der Montage des zweiten Bauteils, insbesondere in dem temporär vorliegenden Zwischenzustand, und/oder im Montagezustand kann Werte von 10% bis 91%, von 10% bis 78%, von 10% bis 56%, bevorzugt von 10% bis 45%, besonders bevorzugt von 10% bis 40% aufweisen.

Die Kompression des zweiten Auflageelements in dem im Zuge der Montage des zweiten Bauteils durchlaufenen Zwischenzustand ergibt sich aus der nachfolgenden Formel (1):

$$K_1 = \frac{D-D'}{D} \quad (1).$$

Die Variable D bezeichnet die Materialdicke des zweiten Auflageelements im unverformten Ausgangszustand. Die Variable D' bezeichnet die Materialdicke des zweiten Auflageelements in dem Zwischenzustand. Im Zwischenzustand kann die Kompression Werte von 40% bis 91%, von 40% bis 78% oder von 40% bis 50% aufweisen.

Die Kompression des zweiten Auflageelements im Montagezustand ergibt sich aus der nachfolgenden Formel (2):

$$K_2 = \frac{D-D''}{D} \quad (2).$$

Die Variable D bezeichnet die Materialdicke des zweiten Auflageelements im unverformten Ausgangszustand. Die Variable D" bezeichnet die Materialdicke des zweiten Auflageelements im endgültigen Montagezustand. Im Montagezustand des zweiten Auflageelements kann die Kompression Werte von 10% bis 65%, von 10% bis 54%, von 10% bis 43%, bevorzugt von 10% bis 40% aufweisen.

Bevorzugt wird das Material bzw. das zweite Auflageelement bezüglich seiner Abmessungen (d.h. Breite, Dicke, Länge) derart dimensioniert, dass es in der Anwendung, von 10% bis 91% komprimiert wird. Die Materiallänge entspricht bevorzugt in etwa der Nutleistenlänge.

Das Material für das zweite Auflageelement verhält sich aufgrund seiner zuvor erwähnten zellularen Eigenschaften vorzugsweise im Wesentlichen wasserdicht oder bevorzugt stark wasserabweisend. Das zweite Auflageelement kann beispielsweise als Schaumschnur realisiert sein, deren Länge vorzugsweise in etwa der Rastnutlänge entspricht. Eine solche Schaumschnur kann auch geschlitzt sein, um die Montagekräfte beim Einführen der Bauteilrippe in die Rastnut zu steuern. Prinzipiell kommen neben Schaumschnüren auch Schaumbänder bzw. Schaumklebebänder in Frage sowie direkt aufschäumende Materialien. Auch die Verwendung eines, vorzugsweise halbsteifen, Schaumsubstrates als Kernbestandteil des zweiten Auflageelementes ist denkbar. In einer bevorzugten Ausführungsform umfasst das zweite Auflageelement einen Schaum, bevorzugt einen PUR-Schaum und besonders bevorzugt einen Einkomponenten-PUR-Schaum (1K-PUR). Der Schaum ist dabei bevorzugt zumindest teilweise geschlossenzellig und an der Oberfläche geschlossenporig. Der verwendete Schaum hat im Ausgangszustand, d.h. während des Aufbringens, bevorzugt thixotrope oder strukturviskose (d.h. scherverdünnende) Eigenschaften, wodurch das Ausgangsmaterial zwar leicht durch eine Aufbringdüse oder -tülle aufbringbar ist, jedoch nach dem Aufbringen (wieder) eine höhere Viskosität annimmt, so dass ein Verlaufen der Materialspur und/oder eine wesentliche Querschnittsveränderung während der Härtung des Schaums zumindest teilweise vermieden wird oder werden, wodurch enge Toleranzen eingehalten werden können. Der Schaum kann am Rastnutschenkel oder am Rastnutboden angeordnet sein. Eine Anordnung am Rastnutboden ist bevorzugt, wobei dieser bevorzugt vollständig bedeckt wird, wobei sich der ausgehärtete Schaum an die Kontur der Rastnut anschmiegen kann. Weitere alternative Materialien für das zweite Auflageelement sind: Zellkautschuk, NBR, Silikone, etc.. In Frage kommen sämtliche abdichtenden Materialien, welche sich entlang des Einrastabschnittes anordnen und befestigen lassen und bevorzugt weichelastische Eigenschaften aufweisen. Auch Kombinationen aus den zuvor genannten Materialien sind denkbar.

Im Rahmen des erfindungsgemäßen Verfahrens könnte auch, zumindest abschnittsweise, eine Oberflächenbehandlung, beispielsweise mittels Plasma, zur Beeinflussung der Oberflächenenergie am Einrastabschnitt erfolgen, um die Haftung des zweiten Auflageelementes an der Oberfläche zu verbessern. Insofern könnte sich die Benetzbarkeit der Oberfläche des Einrastabschnittes, zumindest im Bereich der Auflage bzw. Anlage des zweiten Auflageelementes von der Benetzbarkeit der unmittelbar angrenzenden Bereiche dahingehend unterscheiden, dass an der Oberfläche der unmittelbar angrenzenden Bereiche eine außerhalb der üblichen Toleranzen messbare geringere Oberflächenenergie vorherrscht. Zumindest im Bereich der Auflage bzw. Anlage des zweiten Auflageelementes kann somit bevorzugt eine möglichst vollständige Benetzbarkeit vorgesehen sein (d.h. eine möglichst hohe Oberflächenenergie vorherrschen).

Gemäß der Erfindung ist das zweite Auflageelement mehrteilig ausgebildet, wobei zwei Auflageelementabschnitte vorgesehen sind, welche jeweils ein offenes Ende der Rastnut stirnseitig abdichten. Diese Lösung kann isoliert oder in Kombination mit allen zuvor genannten Lösungen an der Nutleiste vorgesehen sein, z.B. in Kombination mit einer Schaumschnur am Einrastabschnitt. Beide Auflageelementabschnitte sind bevorzugt stoffschlüssig mit jeweils einer Stirnseite des Einrastabschnittes verbunden. Die so erzielten stirnseitigen Rastnutabdeckungen können realisiert sein, beispielsweise mittels Rastnutstöpseln (z.B. aus Silikon oder aus einem geschlossenzelligen oder aus einem halbgeschlossenzelligen, vorzugsweise abdichtenden, Schaum), die am Rastnutende einpressbar sind, so dass die Rastnutenden mittels der Rastnutstöpsel dicht verschließbar sind, ähnlich wie der Gehörgang eingangsseitig mittels eines Ohrenstöpsels verschließbar ist. Dieses Einpassen bzw. Einpressen kann auch erst dann erfolgen, wenn das zweite Bauteil mittels der Bauteilrippe mit der Rastnut verbunden wurde. Mit Rastnutstöpseln vorkonfektionierte Nutleisten sind ebenfalls denkbar. Die Vorkonfektionierung kann bereits bei der Herstellung erfolgen, bei welcher ein erster Rastnutstöpsel am Profilstrangende eingebracht wird und ein zweiter Rastnutstöpsel nach dem Abtrennen eines Profilstrangabschnittes vom Profilstrang stirnseitig in das noch offene Rastnutende des Profilstrangabschnittes eingebracht wird. Alternativ können beide Rastnutstöpsel nach dem Abtrennen eines Profilstrangabschnittes vom Profilstrang jeweils an den offenen Rastnutenden des Profilstrangabschnittes eingebracht werden.

Alternativ kämen auch flächige Auflageelemente in Frage, beispielsweise Folien, welche stirnseitig auf die Querschnittsfläche der Rastnut aufgeklebt oder aufgeschweißt (z.B. mittels Ultraschallschweißen oder Heißschweißen) sind bzw. werden, um die offene Rastnut stirnseitig zu verschließen. Diese Folien können beispielsweise bereits im Rahmen des Herstellprozesses der Nutleiste mittels Formstanzen hergestellt werden. Für die Folie sollte ein Kunststoffmaterial gewählt werden, welches verklebbar und/oder verschweißbar (z.B. PE, PP, PVC) ist. Die beidseitigen Folien umfassen jeweils eine bauteilseitige Lasche, welche sich im Querschnitt betrachtet zwischen zwei gegenüberliegenden Rastnutschenkeln erstrecken. Das zweite Bauteil kann auf den Laschen aufliegen, so dass die Laschen jeweils an den Bauteilunterseiten, idealerweise vollflächig, anliegen. Die Laschen können zusätzlich mit dem Bauteil verklebt oder verschweißt werden, vorzugsweise liegen sie jedoch bereits aufgrund des mittels der Rastverbindung verursachten Anpressdrucks zwischen dem zweiten Bauteil und der Rastnut vollflächig und vorzugsweise abdichtend am zweiten Bauteil an, nachdem eine Verbindung zwischen der Rastrippe und der Rastnut hergestellt wurde. Im Rahmen des Herstellverfahrens wird dies bevorzugt dadurch umgesetzt, dass ein abgetrennter Profilstrangabschnitt zunächst mechanisch arretiert wird. Mittels eines Stanzvorgangs werden zwei passende Folienformstücke aus einem Folienabschnitt hergestellt, welche jeweils an die Stirnflächen des arretierten Profilstrangabschnittes herangeführt und dort fixiert bzw. angeordnet werden. Anschließend kann das Folienformstück mit dem Nutleistenmaterial wie oben beschrieben stirnseitig verbunden (z.B. verklebt bzw. verschweißt) werden. Danach kann der Profilstrangabschnitt bzw. die fertig konfektionierte Nutleiste aus der Arretierung gelöst und verpackt werden. Insofern ist auch diese Variante der Erfindung mittels weniger Zusatzschritte leicht automatisierbar.

Ausdrücklich Teil der Erfindung sind Kombinationen aus einem mehrteiligen zweiten Auflageelement (mit zwei stirnseitigen Auflageelementabschnitten) und weiteren zweiten Auflageelementen, wie zuvor beschrieben. So kann beispielsweise ein mehrteiliges zweites Auflageelement mit einem (mit oder ohne Aufnahmenut) an einem Rastnutschenkel und/oder in der Rastnut angeordneten weiteren zweiten Auflageelement kombiniert werden.

Im Rahmen des erfindungsgemäßen Herstellverfahrens wird generell die Methode der Kunststoff-Extrusion bevorzugt, wobei vorzugsweise zumindest eines der beiden Auflageelemente mittels Ko-Extrusion und/oder mittels Post-Koextrusion am Profilstrang angeordnet wird. Bei der Ko-Extrusion entstehen Auflageelement und Nutleiste bevorzugt im Rahmen einer Extrusion von Kunststoff(en) unter gleichzeitiger Verwendung einer gemeinsamen Extrusionsdüse. Bei der Post-Koextrusion wird zunächst die Nutleiste mittels einer ersten Extrusionsdüse hergestellt und anschließend das Auflageelement an der Nutleiste mittels einer zweiten Extrusionsdüse (z.B. Beistellextruder) an der Nutleiste angeordnet, z.B. in eine hinterschnittene Nut eingebracht. Verfahren mit extrusionsähnlichen Bedingungen sind ebenfalls geeignet, ebenso wie das Strangpressverfahren bei geeigneter Materialwahl. Denkbar wäre auch die Herstellung der Nutleiste als Spritzgießformteil mittels eines Kunststoff-Spritzgießverfahrens. Das Material für das zweite Auflageelement, insbesondere ein an oder in der Rastnut vorgesehener Schaum, wird bevorzugt direkt nach Extrusion des Profilstrangs während der Herstellung der Nutleiste aufgebracht. Alternativ kann das Material für das zweite Auflageelement jedoch auch nach Herstellung der Nutleiste aufgebracht werden. Dies kann beispielhaft mittels des Formed In Place Foam Gasket-Verfahrens (FIPFG), durch Einspritzen, Einlegen, Einkleben oder Einklipsen erfolgen. Der Profilstrang oder die Nutleiste kann mittels Plasma vorbehandelt werden, um eine Haftung des zweiten Auflageelements zu verbessern. Weiterhin kann der Profilstrang oder die Nutleiste während der Applikation des zweiten Auflageelements erwärmt werden, etwa mittels Heißluft oder Infrarotstrahlung.

Die Erfindung wird anschließend anhand der nachfolgenden Ausführungsbeispiele in den Zeichnungen grob schematisch dargestellt und unter Bezugnahme auf die Zeichnungen kurz beschrieben. Identische oder gleichwirkende Merkmale sind mit denselben Bezugszeichen versehen, sofern nichts weiter dazu angegeben ist.

Figurenbeschreibung

| Figur 1 | zeigt eine erste Ausführungsform der Erfindung. |
| Figur 2 | zeigt eine zweite Ausführungsform der Erfindung. |
| Figur 3 | zeigt eine dritte Ausführungsform der Erfindung. |
| Figur 4 | zeigt eine vierte Ausführungsform der Erfindung. |
| Figur 5 | zeigt eine fünfte Ausführungsform der Erfindung. |
| Figur 6 | zeigt eine sechste Ausführungsform der Erfindung. |
| Figur 7 | zeigt eine siebte Ausführungsform der Erfindung. |
| Figur 8 | zeigt eine achte Ausführungsform der Erfindung. |
| Figur 9 | zeigt eine neunte Ausführungsform der Erfindung. |
| Figur 10 | zeigt eine zehnte Ausführungsform der Erfindung. |
| Figur 11 | zeigt eine elfte Ausführungsform der Erfindung. |
| Figur 12 | zeigt eine zwölfte Ausführungsform der Erfindung. |
| Figuren 13a bis 13c | zeigen eine dreizehnte Ausführungsform der Erfindung. |
| Figur 14 | zeigt eine vierzehnte Ausführungsform der Erfindung. |
| Figur 15 | zeigt eine fünfzehnte Ausführungsform der Erfindung. |
| Figur 16 | zeigt eine sechzehnte Ausführungsform der Erfindung. |
| Figur 17 | zeigt einen extrudierten oder stranggepressten Profilstrang. |

Detaillierte Beschreibung der Zeichnungen

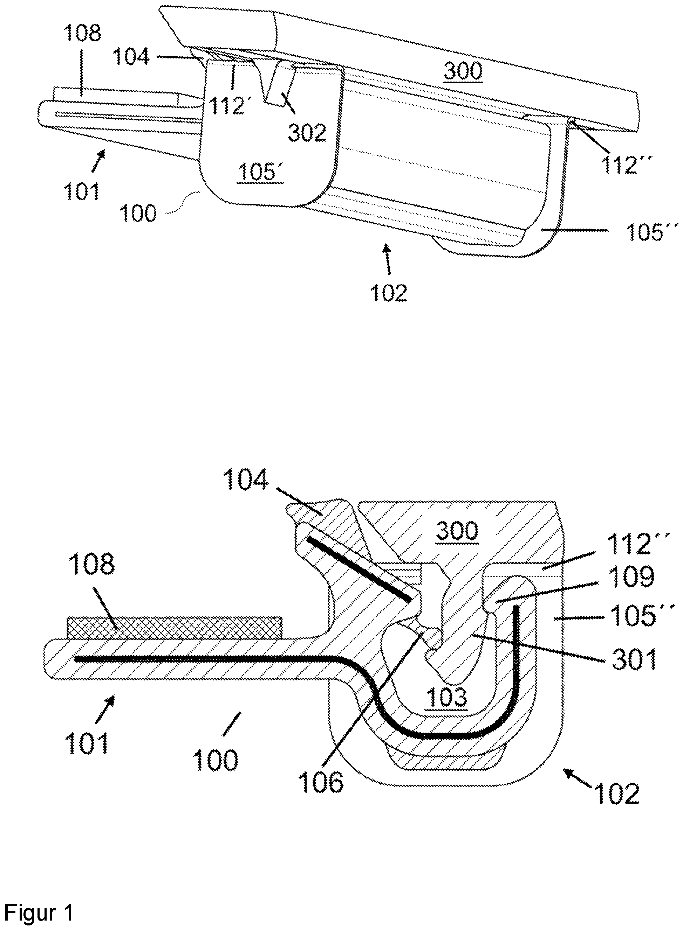

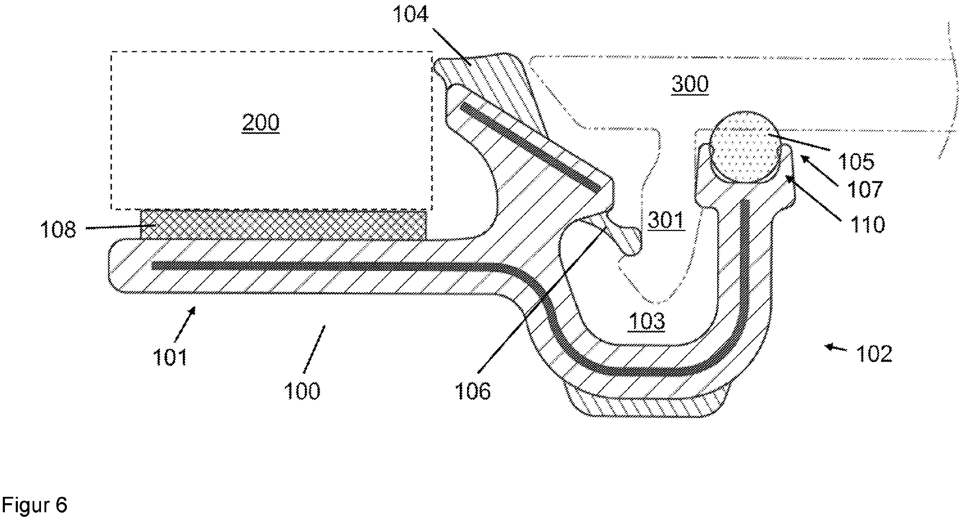

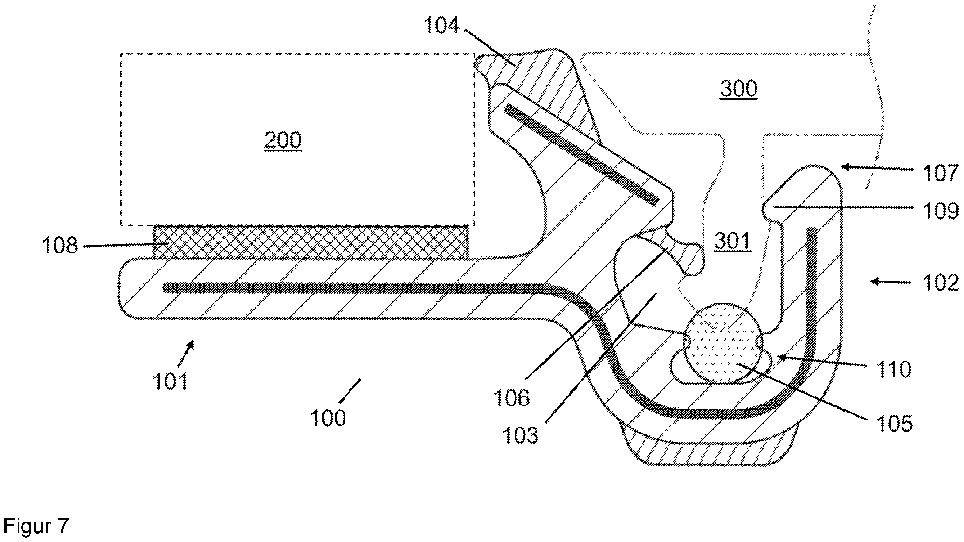

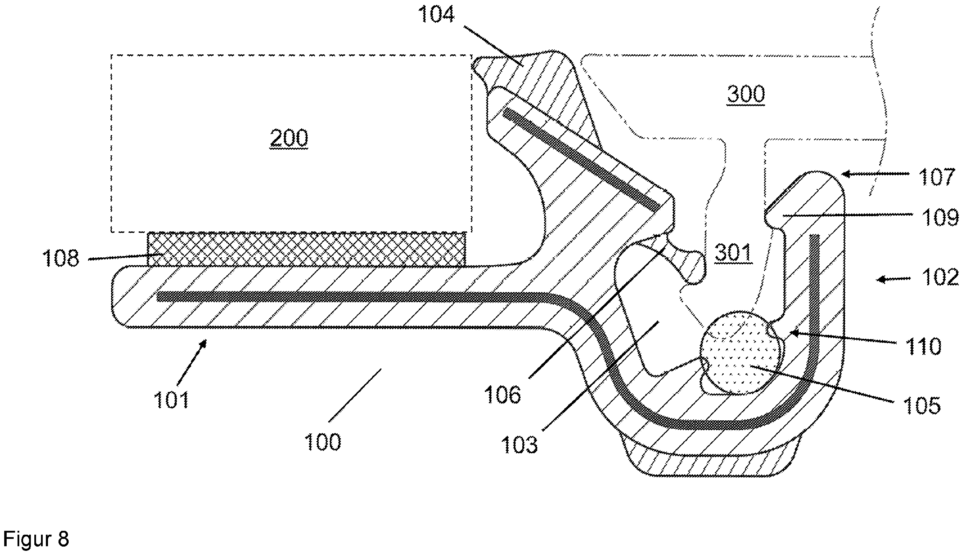

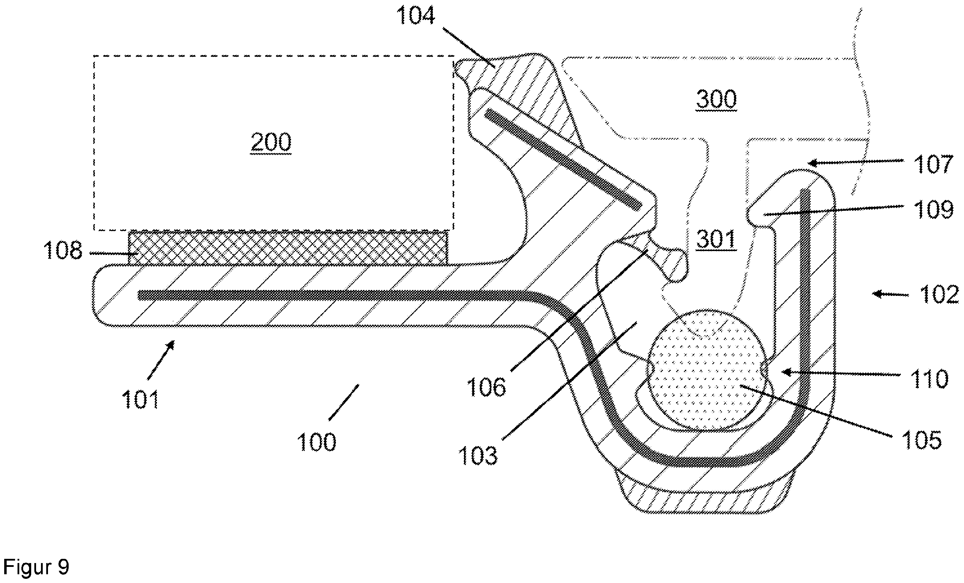

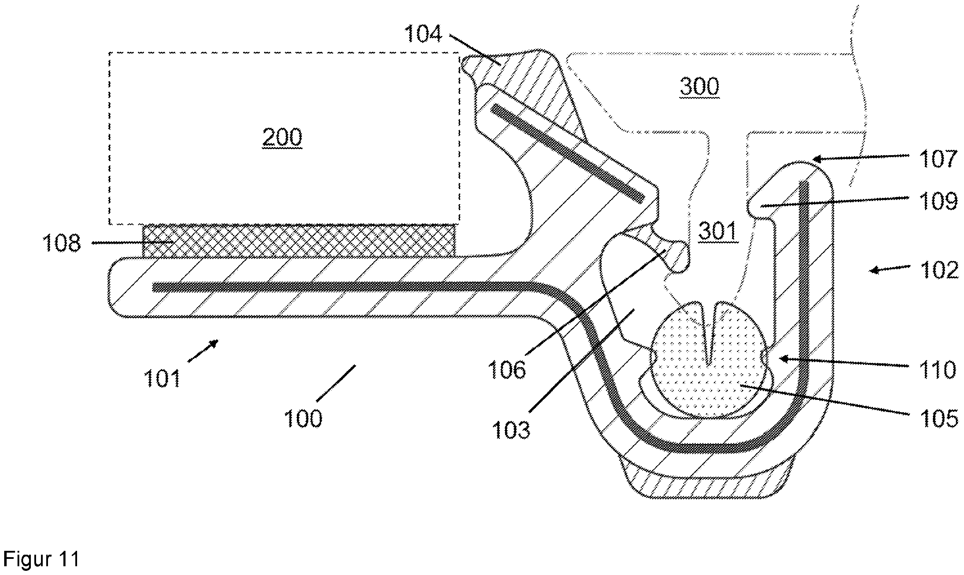

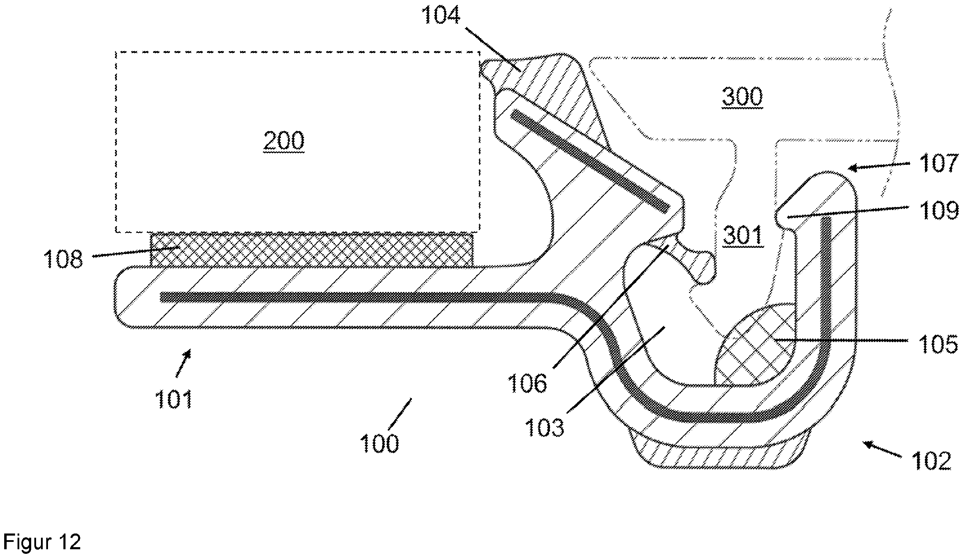

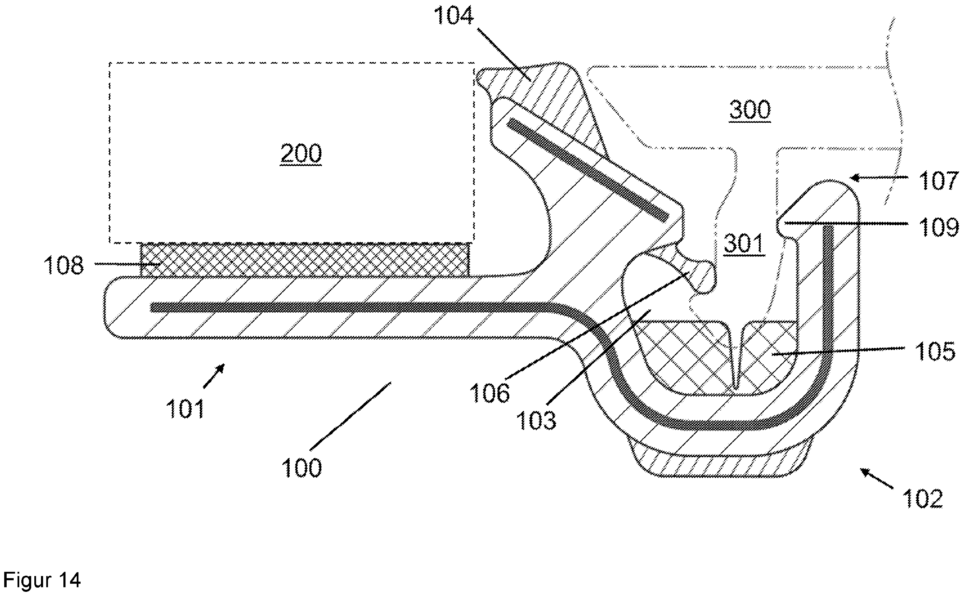

In allen nachfolgend beschriebenen Figuren 1 bis 16 ist jeweils eine Nutleiste 100 zum Verbinden eines ersten Bauteils 200 (z.B. Windschutzscheibe eines Fahrzeugs) mit einem zweiten Bauteil 300 (z.B. Wasserkastenabdeckung eines Fahrzeugs) gezeigt. Der sich entlang der Nutleiste 100 erstreckende Befestigungsabschnitt 101 ist an einem Umfangsabschnitt des ersten Bauteils 200 anordenbar und fixierbar, beispielsweise mittels eines doppelseitigen Kle-

6

bebandes 108. Der Befestigungsabschnitt 101 kann zusätzlich ein erstes Auflageelement 104 für das erste und/oder das zweite Bauteil 200, 300 umfassen. Beide Bauteile 200, 300 können am Auflageelement 104 aufliegen und/oder anliegen und dabei auch mittels eines stirnseitigen Spaltes voneinander und/oder von dem Auflageelement 104 beabstandet sein. Vorzugsweise erfüllt das erste Auflageelement 104 auch die Funktion eines Dichtelementes, um einen möglicherweise vorhandenen Spalt zwischen dem ersten und/oder dem zweiten Bauteil 200, 300 aufzufüllen und/oder abzudichten. Dies könnte die Ansammlung von Schmutz im Spalt vermeiden. Besonders bevorzugt wirkt das erste Auflageelement 104 spaltreduzierend zwischen dem zweiten Bauteil 300 und dem Einrastabschnitt 102. Im Idealfall dichtet das erste Auflageelement 104 den Spalt wasserdicht ab. Es sind jedoch auch Varianten denkbar, bei denen ein möglicherweise vorhandener Spalt unverschlossen bleibt, um auftretende Feuchtigkeit auch mittels des darunterliegenden Nutleistenmaterials abzuleiten.

Seitens des zweiten Bauteils 300 begrenzt das erste Auflageelement 104, bevorzugt während der Montage, die Eindringtiefe der Bauteilrippe 301 bezüglich der Rastnut 103, indem das zweite Bauteil 300 ab einer vorbestimmten Eindringtiefe auf oder an dem ersten Auflageelement 104 zum Aufliegen und/oder zum Anliegen kommt. Das erste Auflageelement 104 kann mittels eines weicheren Materials (z.B. TPE) realisiert sein als das für die Abschnitte 101, 102 verwendete Material (z.B. PP, PVC, ABS, PA). Auflageelement 104 und Abschnitte 101, 102 werden bevorzugt mittels Ko-Extrusion und/oder mittels Post-Koextrusion von Kunststoffen hergestellt.

Der sich entlang der Nutleiste 100 erstreckende Einrastabschnitt 102 mit einer an beiden Enden bzw. Stirnseiten der Nutleiste 100 offenen Rastnut 103 dient zur Aufnahme einer vom zweiten Bauteil 300 (hier z.B. Wasserkastenabdeckung) umfassten Rastrippe 301. Die Rastnut 103 ist im Querschnitt betrachtet gebildet aus zwei sich gegenüberliegenden Rastnutschenkeln und einem Rastnutboden, welcher beide Rastnutschenkel miteinander verbindet. Gegenüberliegend zum Rastnutboden ist der Rastnuteingang zur Aufnahme der Bauteilrippe 301 vorgesehen. Diese Anordnung ist vorzugsweise einstückig realisiert. Am Einrastabschnitt 102 ist außerdem ein abdichtendes zweites Auflageelement bzw. Dichtelement 105, 105', 105" zur Abdichtung eines Kontaktbereiches bzw. Berührbereiches zwischen dem zweiten Bauteil 300 und dem Einrastabschnitt 102 vorgesehen, sobald das zweite Bauteil 300 bestimmungsgemäß am Einrastabschnitt 102 angeordnet und befestigt bzw. festgelegt und/oder verrastet ist bzw. wird.

Von der Rastnut 103 ist mindestens ein Rastelement 106, 109 umfasst, mittels dessen die bauteilseitige Rastrippe 301 mit der Rastnut 103 form- und/oder kraftschlüssig festlegbar ist, idealerweise verrastbar ist. Diese Anordnung fungiert als Klemmkanal für die Rastrippe 301. Das Rastelement 106, 109 und/oder die Rastrippe 301 erstrecken sich dabei, vorzugsweise durchgehend, entlang des Einrastabschnittes 102. Das zweite Bauteil 300 und/oder dessen Rastrippe 301 liegt dabei am zweiten Auflageelement 105, 105', 105", vorzugsweise vollständig und/oder durchgehend, entlang des Kontaktbereiches derart an, dass einem Eindringen von Feuchtigkeit in die Rastnut 103, insbesondere seitens der offenen Rastnutenden, möglichst vorgebeugt wird (Figuren 1 bis 3).

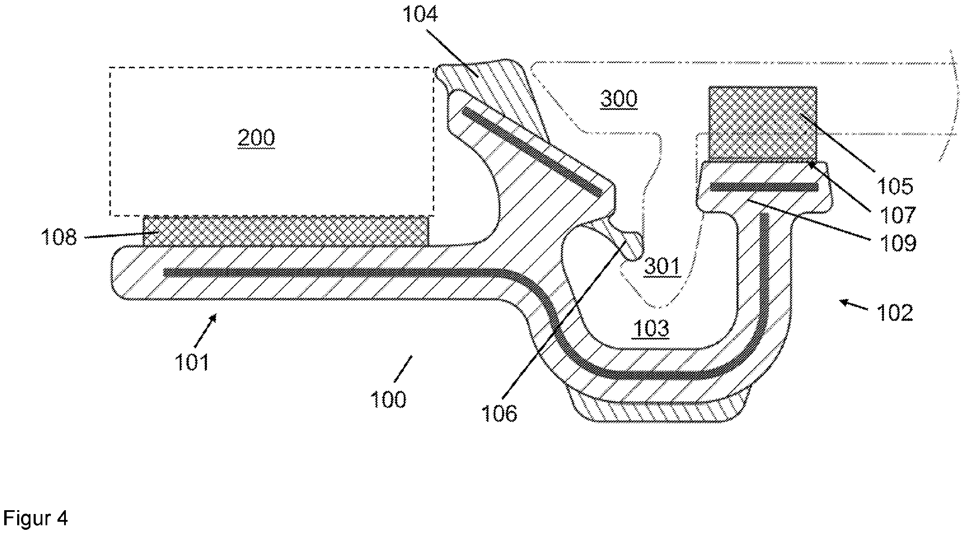

Alternativ oder zusätzlich liegt das zweite Bauteil 300 am zweiten Auflageelement 105, 105', 105", vorzugsweise vollständig und/oder durchgehend, entlang des Kontaktbereiches derart an, dass einem Eindringen von Feuchtigkeit in die Rastnut 103 seitens des sich entlang der Rastnut 103 erstreckenden Rastnuteingangs, mittels dessen bei der Anordnung des zweiten Bauteils 300 am Einrastabschnitt 102 auch die Rastrippe 301 in die Rastnut 103 einführbar ist, vorgebeugt wird. Die Realisierung erfolgt zumindest derart, dass über den Rastnuteingang in die Rastnut 103 eindringende Feuchtigkeit zumindest nicht über den Einrastabschnitt 102 hinaus weitergeleitet wird (Figuren 4 bis 16).

Die Intensität dieser Effekte ist mittels einer geeigneten Dimensionierung des Rastelementes 106, 109 und der hierdurch beeinflussbaren Kraft, mittels welcher das Rastelement 106, 109 auf die Bauteilrippe 301 einwirkt, steuerbar. Diese Kraft kann zumindest eine Kraftkomponente aufweisen, welche die Bauteilrippe 301 in die Rastnut 103 hineinzieht. Dies bewirkt vorteilhafterweise, dass das Bauteil 300 zumindest im Bereich des Einrastabschnittes 102 mittels der Bauteilrippe 301 in Richtung des Nutbodens gezogen werden kann und somit am zweiten Auflageelement 105, 105', 105" angepresst werden kann, bevorzugt so, dass dieses dadurch vorzugsweise eine Komprimierung erfährt. Dadurch ist die Unterseite und/oder die Rippe 301 des Bauteils 300 am zweiten Auflageelement 105, 105', 105" vorzugsweise reibschlüssig und/oder vorzugsweise wasserdicht anordenbar, so dass die Weiterleitung von Fremdstoffen und/oder von Flüssigkeiten in Bereiche jenseits des Einrastabschnittes 102 (z.B. zum Motorraum eines Fahrzeuges) vermieden werden kann. Je nach erzielter Zugkraft und verwendetem Material des zweiten Auflageelementes 105, 105', 105" kann somit auch eine Wasserdichtigkeit oder zumindest eine Spritzwasserdichtigkeit bewirkt werden. Am Einrastabschnitt 102 ist außerdem eine Auflagefläche 107 für das zweite Bauteil 300 vorgesehen, auf welcher das Bauteil 300 aufliegen kann.

Bei den Ausführungsformen gemäß den Figuren 4 bis 6 ist das zweite Auflageelement 105, vorzugsweise mittels einer von der Auflagefläche 107 umfassten Aufnahmenut 110 und/oder vorzugsweise mittels eines doppelseitigen Klebebandes 111, an der Auflagefläche 107 derart angeordnet, dass zumindest ein Bauteilabschnitt des zweiten Bauteils 300, vorzugsweise durchgehend und/oder entlang der Nuterstreckung, am zweiten Auflageelement 105 anliegen kann.

In den Figuren 1 bis 16 sind bevorzugte Ausführungsformen der Erfindung gezeigt, mittels welcher die erfindungsgemäßen Effekte mittels unterschiedlich ausgeführter zweiter Auflageelemente 105, 105', 105" und/oder mittels unterschiedlicher Anbringungsorte für die unterschiedlich ausgeführten zweiten Auflageelemente 105, 105', 105" bewirkt werden können. Der Anbringungsort ist am und/oder entlang des Einrastabschnittes 102 und/oder innerhalb und/oder außerhalb der Rastnut 103 vorgesehen. Um Wiederholungen zu vermeiden, beschränken sich die nachfolgenden Erläuterungen auf die Besonderheiten der einzelnen Ausführungsformen, mittels derer sich diese voneinander unterscheiden. Identische Bezugszeichen haben in allen Figuren dieselbe Bedeutung. Im Übrigen wird auf die bereits erfolgten Erläuterungen und auf die ausführliche Bezugszeichenliste verwiesen.

In den Figuren 1 bis 3 ist das erste Bauteil 200 weder gezeigt noch angedeutet, welches mittels des doppelseitigen Klebebandes 108 am Befestigungsabschnitt 101 anordenbar ist.

Figur 1 zeigt eine erste Ausführungsform der Nutleiste 100. Das zweite Auflageelement 105', 105" ist hierbei zweiteilig ausgeführt in Form von Flächenelementen, welche zwei Auflageelementabschnitte 105', 105" bilden, insbesondere in Form von zugeschnittenen bzw. gestanzten Folien 105', 105". Die Teile 105', 105" sind stirnseitig jeweils an den Enden der Nutleiste 100 angeordnet und bezüglich ihrer Konturen im Wesentlichen an den Querschnitt des Einrastabschnittes 102 angepasst. Die Flächenelemente 105', 105" wurden nach der Herstellung der Nutleiste 100 stirnseitig am Einrastabschnitt 102 angeordnet, vorzugsweise angeklebt oder angeschweißt, um die offene Rastnut 103 beidseitig stirnseitig zu verschließen. Die Flächenelemente 105', 105" umfassen bauteilseitig jeweils eine Auflagelasche 112', 112", mittels welcher die Unterseite des zweiten Bauteils 300 an den Flächenelementen 105', 105" aufliegen kann, um dadurch eine rastnutseitige Abdichtung, zumindest gegen Spritzwasser, zu erhalten. Der keilförmige Materialvorsprung 302 kann beidseitig an der Unterseite des Bauteils 300 vorgesehen sein, um die Flächenelemente 105', 105", insbesondere im Bereich des Rastnuteingangs, zu versteifen und einer ggf. vorhandenen Materialwelligkeit eines Folienmaterials 105', 105" vorzubeugen.

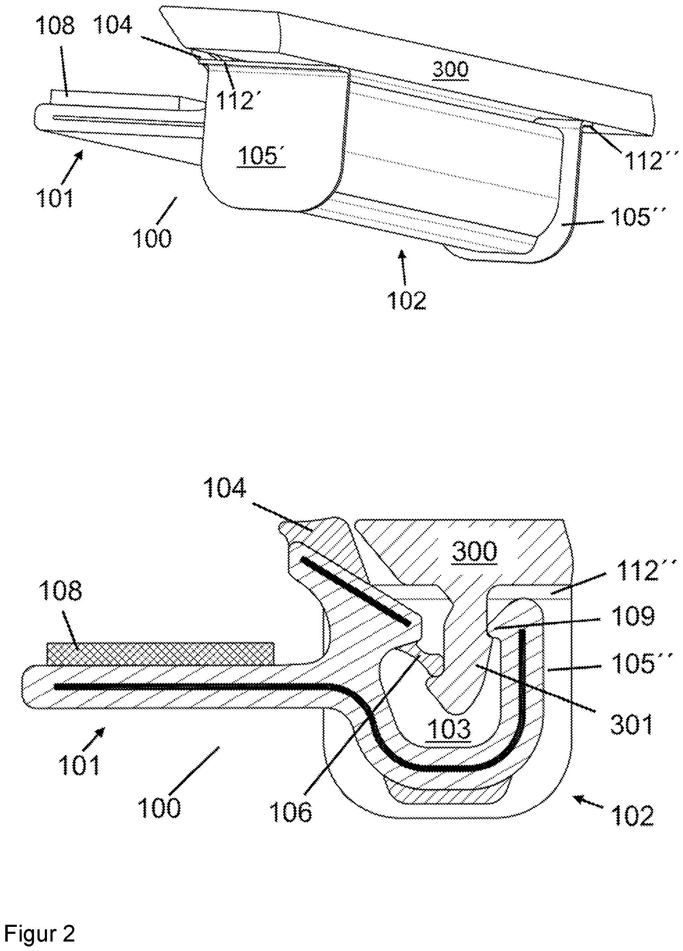

Figur 2 zeigt eine zweite Ausführungsform der Nutleiste 100. Der keilförmige Materialvorsprung 302 aus Figur 1 entfällt hier. Um die Flächenelemente 105', 105" im Bereich des Rastnuteingangs zu versteifen, könnte auch Material mit einer Materialdicke verwendet werden, welche einer Materialtorsion vorbeugt. Alternativ könnte auch bewehrtes Material verwendet werden, welches eine versteifende Wirkung auf beide Rastnutschenkel, insbesondere im Bereich des Rastnuteingangs, hat. Im Übrigen gelten die Erläuterungen zu Figur 1 analog.

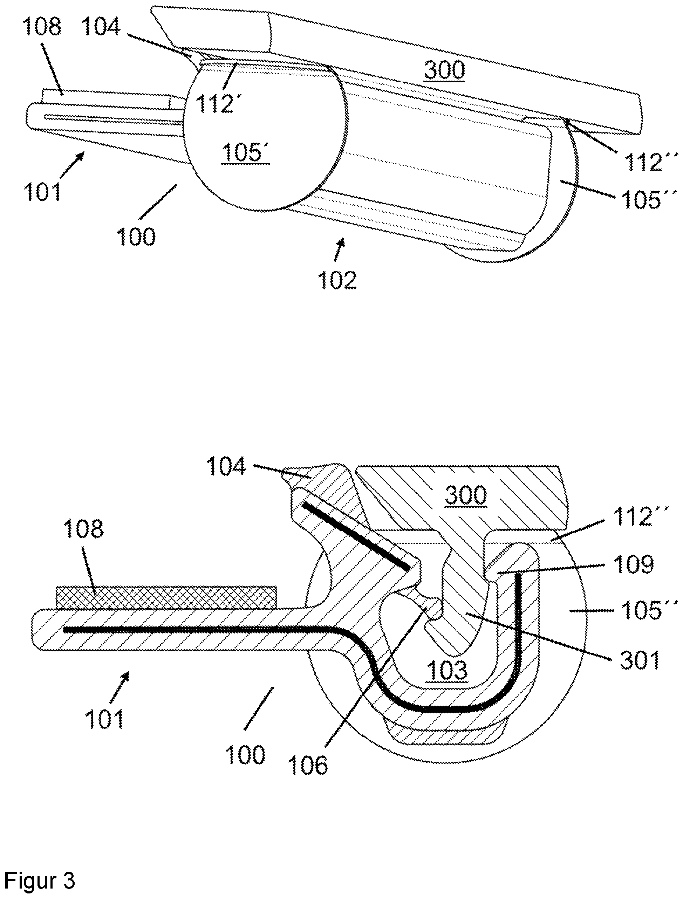

Figur 3 zeigt eine dritte Ausführungsform der Nutleiste 100. Die Flächenelemente 105', 105" umfassen hierbei ein Kreissegment aus einer Kunststofffolie. Die Laschen 112', 112" sind am Kreissegment bauteilseitig angeordnet. Im Übrigen gelten die Erläuterungen zu Figur 2 analog.

Die Figuren 4 bis 16 zeigen weitere erfindungsgemäße Ausführungsformen im Querschnitt, welche, im Gegensatz zu den in den Figuren 1 bis 3 gezeigten Ausführungsformen, ohne ein mehrteiliges Auflageelement 105', 105", d.h. ohne stirnseitige Flächenelemente 105', 105" an den Rastnutenden, dargestellt sind. Dennoch sei angemerkt, dass bei allen in den Figuren 4 bis 16 gezeigten Ausführungsformen zusätzlich noch erfindungsgemäß mehrteilige Flächenelemente oder Auflageelementabschnitte 105', 105" gemäß den Figuren 1, 2 oder 3 vorgesehen und angeordnet sein können. Hierdurch ließen sich die Vorteile der in den Figuren 4 bis 16 gezeigten Ausführungsformen um die Vorteile der in den Figuren 1 bis 3 gezeigten Lösungen ergänzen. In den Figuren 4 bis 16 sind die Bauteile 200, 300 aus Gründen der Übersichtlichkeit lediglich grob schematisch angedeutet, ohne dass die eingezeichneten Bauteilkonturen in irgendeiner Weise limitierend zu verstehen sind. Bei den Ausführungsformen gemäß den Figuren 4 bis 16 wird ein vorzugsweise einstückiges und sich, vorzugsweise vollständig, entlang des Einrastabschnittes 102 erstreckendes Auflageelement 105 verwendet.

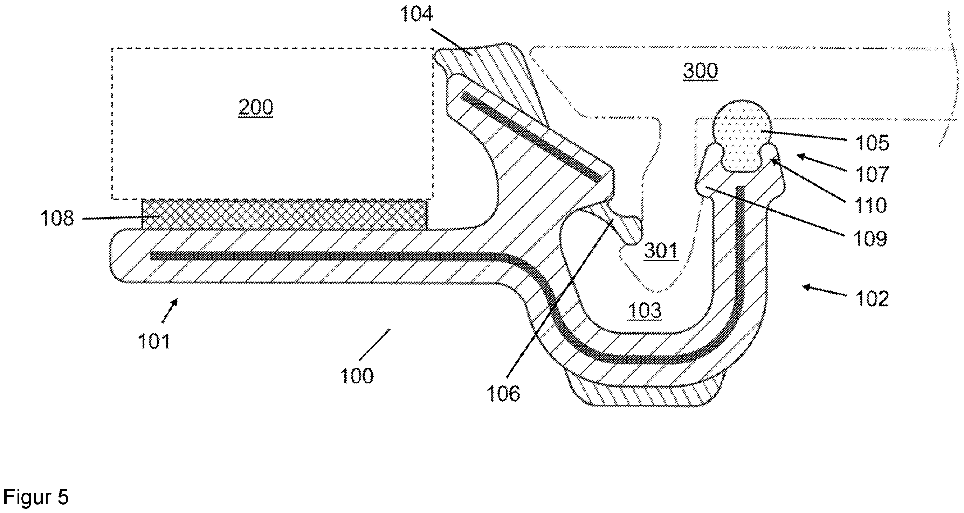

Bei den Ausführungsformen gemäß den Figuren 5 bis 11 ist entlang des Einrastabschnittes 102 eine Aufnahmenut 110 zur Aufnahme des zweiten Auflageelementes 105 vorgesehen. Die Aufnahmenut 110 kann außerhalb und/oder innerhalb der Rastnut 103 vorgesehen sein, vorzugsweise an einem Rastnutschenkel oder am Rastnutboden oder am Übergang zwischen einem der Rastnutschenkel und dem Rastnutboden. Die Rastnut 103 erstreckt sich vorzugsweise entlang und/oder parallel der vorzugsweise gesamten Länge des Einrastabschnittes 102 und vorzugsweise parallel zu der vom Bauteil 300 umfassten Rastrippe 301, welche lediglich einen Bauteilabschnitt darstellt.

Bei den Ausführungsformen gemäß den Figuren 4 bis 16 erstreckt sich das zweite Auflageelement 105 entlang der vorzugsweise gesamten Länge des Einrastabschnittes 102, vorzugsweise innerhalb einer Aufnahmenut 110 gemäß einer der in den Figuren 5 bis 11 gezeigten Ausführungsformen. Die Ausführung erfolgt dabei so, dass das Bauteil 300 mittels seiner Rastrippe 301 zumindest an einem Rastelement 106, 109 und gleichzeitig mittels eines Abschnittes der Bauteilunterseite außerhalb der Rastnut 103 am zweiten Auflageelement 105 und/oder an der Auflagefläche 107 anliegt. Alternativ erfolgt die Ausführung so, dass die Rastrippe 301 des Bauteils 300 gleichzeitig zumindest an einem Rastelement 106, 109 und am zweiten Auflageelement 105 anliegt. Im Übrigen wird der Rastrippenhub der Rastrippe 301 innerhalb der Rastnut 103 mittels der Auflagefläche 107 und/oder mittels des Nutbodens begrenzt.

In den Figuren 4 sowie 12 bis 16 sind Varianten der Erfindung ohne Aufnahmenut 110 gezeigt. Hier ist das zweite Auflageelement 105 unmittelbar mit der Oberfläche des Einrastabschnittes 102, vorzugsweise stoffschlüssig, verbunden, beispielsweise verklebt. Hierzu kann die Nutleiste 100 beispielsweise mittels Plasma vorbehandelt werden.

Die Figuren 13a bis 13c zeigen eine erfindungsgemäße Nutleiste 100 mit einem zweiten Auflageelement 105, welches am Boden der Rastnut 103 angeordnet ist. Die Nutleiste kann an einem nur angedeutet dargestellten ersten Bauteil 200 festgelegt sein.

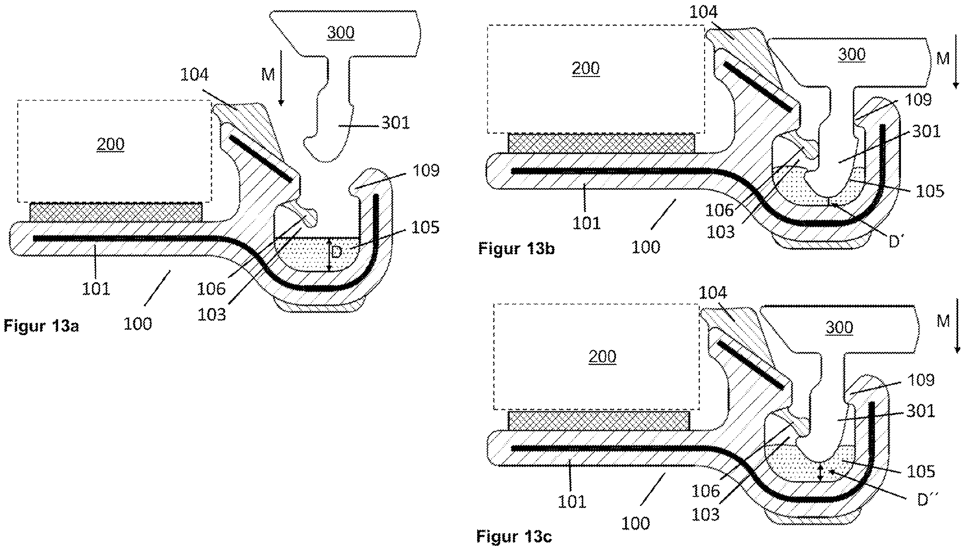

In der Figur 13a ist die erfindungsgemäße Nutleiste 100 vor der Montage des zweiten Bauteils 300 dargestellt. Das zweite Auflageelement 105 liegt in seinem unverformten Ausgangszustand vor und weist eine Materialdicke D auf. Ausgehend von dem Vormontagezustand gemäß Figur 13a erfolgt die Montage des zweiten Bauteils 300, indem das zweite Bauteil 300 derart an die Nutleiste angenähert wird, dass die Rastrippe 301 in die Rastnut 103 der (zum Zwecke dieser Beschreibung als stationär angenommenen) Nutleiste 100 eintaucht (Montagerichtung M).

Die Figur 13b zeigt die erfindungsgemäße Nutleiste 100 in einem Zwischenzustand im Zuge der Montage des zweiten Bauteils 300. Die Rastrippe 301 des zweiten Bauteils 300 ist unter der Wirkung einer auf das Bauteil 300 ausgeübten (und in Figur 13b in eine Montagerichtung M "nach unten" gerichteten) Montagekraft so tief in die Rastnut 103 eingetaucht, dass an der Rastrippe vorgesehene Vorsprünge in Hintergriff mit dem Rastelement 106 und der Hinterschneidung 109 der Rastnutschenkel gekommen sind. Das zweite Auflageelement 105 ist dabei bereichsweise oder abschnittweise komprimiert, bevorzugt elastisch verformt, und weist in diesem Zwischenzustand eine Materialdicke D' auf, gemessen im Bereich der maximalen Verringerung der Materialdicke und ausgehend vom Rastnutboden in Richtung des Rastnuteingangs. Die Kompression $K_1$ des zweiten Auflageelements 105 in diesem Zwischenzustand ergibt sich gemäß Formel (1) als:

$$K_1 = \frac{D - D'}{D} \quad (1).$$

Bei Wegnahme der Montagekraft bewirken die Rückstellkräfte des elastisch komprimierten zweiten Auflageelements 105 ausgehend von dem in Figur 13b dargestellten Zwischenzustand eine Bewegung des zweiten Bauteils 300 in eine der Montagerichtung M entgegengesetzte Richtung (in Figur 13b "nach oben"), bis die an der Rastrippe 301 vorgesehenen Vorsprünge an dem Rastelement 106 und/oder an der Hinterschneidung 109 des Rastnutschenkels anliegen und eine weitere Bewegung begrenzen. Der dann erreichte endgültige Montagezustand ist in Figur 13c dargestellt. Die Rastrippe 301 ist mit den Rastelementen 106, 109 verrastet. Das zweite Auflageelement 105 ist komprimiert und weist eine Materialdicke D" auf, die kleiner ist als die Materialstärke D im unverformten Ausgangszustand und größer als die Materialstärke D' im Zwischenzustand gemäß der Figur 13b. Die Kompression $K_2$ des zweiten Auflageelements im Montagezustand ergibt sich gemäß Formel (2) als:

$$K_2 = \frac{D - D''}{D} \quad (2).$$

Das zweite Auflageelement 105 kann nach erfolgter Montage des zweiten Bauteils 300 optional den zum zweiten Auflageelement 105 benachbarten Bereich der Rastrippe 301 zumindest teilweise konturgenau umschließen oder sich formgenau der Kontur der Rastrippe 301 anpassen. Das zweite Auflageelement 105 kann dazu beispielsweise mittels eines weicheren Materials (z.B. TPE, extrudierbarer Kautschuk oder PUR, jeweils bevorzugt in Form eines Schaums) realisiert sein als die Abschnitte 101, 102 (z.B. jeweils PP, PVC, ABS, PA) und insbesondere weicher als die Rastrippe 301. Das zweite Auflageelement 105 und die Abschnitte 101, 102 können mittels Ko-Extrusion von Kunststoffen hergestellt werden. Alternativ kann das zweite Auflageelement 105 nachträglich aufgebracht werden, wie weiter oben bereits beschrieben (z.B. mittels einer Post-Koextrusion). Weiterhin kann das zweite Auflageelement 105, insbesondere in Form des Schaumes, mittels des Formed In Place Foam Gasket-Verfahrens (FIPFG), durch Einspritzen, Einlegen, Einkleben oder Einklipsen aufgebracht werden.

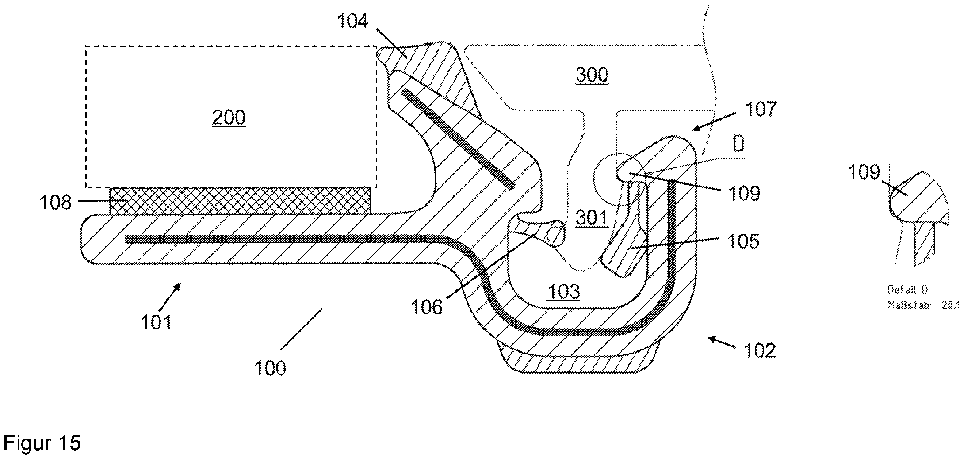

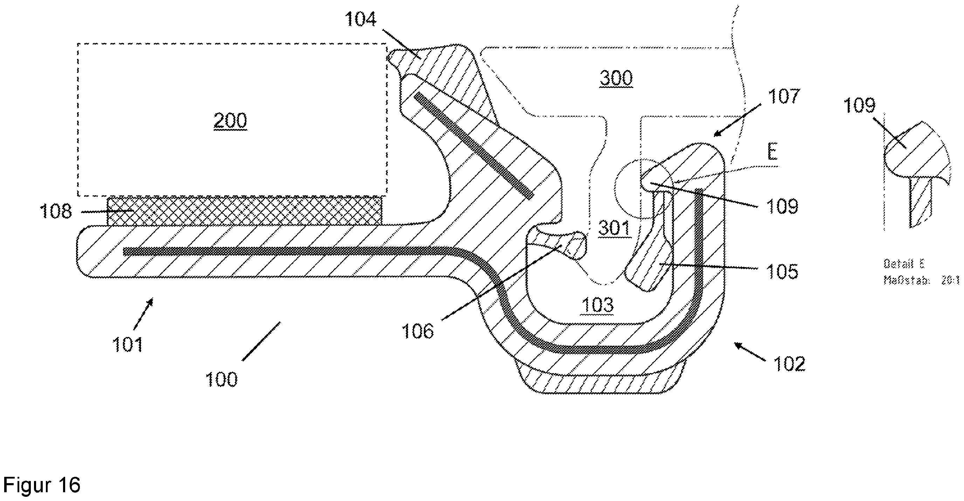

In den Ausführungsformen gemäß den Figuren 15 und 16 sind Varianten der Erfindung gezeigt, wobei das zweite Auflageelement 105, vorzugsweise mittels eines weichelastischen Materials (z.B. TPE), als eine dem Rastelement 106 gegenüberliegende Dichtlippe 105 realisiert ist. Die Dichtlippe 105 ist, bevorzugt an einem Vorsprung 109, innerhalb der Rastnut 103 angeordnet. Der Vorsprung 109 ist, bevorzugt mittels einer Hinterschneidung, an einem zweiten Rastnutschenkel realisiert, welcher dem ersten Rastnutschenkel gegenüberliegt, an dem auch das Rastelement 106 angeordnet und gezeigt ist. Bei im Wesentlichen waagrechter Ausrichtung der Nutleiste erhält man eine am Vorsprung 109 angeordnete und aufgehängte Dichtlippe 105, welche bei dieser Ausrichtung im Wesentlichen parallel zu dem zweiten Rastnutschenkel verläuft, so dass zwischen der Dichtlippe 105 und dem zweiten Rastnutschenkel zumindest abschnittsweise ein materialfreier erster Zwischenraum realisiert ist. Zumindest das freie Ende der Dichtlippe 105 ist derart realisiert, dass es einen zweiten Zwischenraum zwischen der Bauteilrippe 301 und dem zweiten Rastnutschenkel innerhalb der Rastnut 103 zumindest abschnittsweise, vorzugsweise entlang des Einrastabschnittes 102, vorzugsweise vollständig und abdichtend, ausfüllt. Der Vorsprung 109 kann je nach Ausgestaltung der Bauteilrippe 301 eine zusätzliche Rastfunktion übernehmen, d.h. dann als zweites Rastelement 109 ausgebildet sein. Die Bauteilrippe 301 müsste dazu vorsprungseitig korrespondierend zum Vorsprung 109 bzw. zum zweiten Rastelement 109 ausgebildet sein, so dass sich ein, vorzugsweise form- und/oder kraftschlüssiger, Halte- bzw. Arretierungseffekt einstellt, sobald die Bauteilrippe 301 weit genug in die Rastnut 103 eintaucht. In Detail D von Figur 15 ist beispielsweise gezeigt, wie der am Rastnuteingang angeordnete Vorsprung 109 der Rastnut 103 mit einer geeignet geformten Bauteilrippe 301 hakenartig oder widerhakenartig zusammenwirken könnte. In Detail E von Figur 16 ist beispielsweise gezeigt, dass der eingangsseitige Vorsprung 109 der Rastnut 103 bei fehlender geeigneter Form der Bauteilrippe 301 keinerlei Rastwirkung entfaltet. In beiden Fällen liegt jedoch die Rastrippe 301 mindestens am Rastelement 106 und gleichzeitig auch am zweiten Auflageelement 105 an und bewirkt damit eine Abdichtung innerhalb und vorzugsweise durchgehend entlang der Rastnut 103, so dass zumindest einem Feuchtigkeitstransport bzw. Flüssigkeitstransport mittels der Rastnut 103 über den Einrastabschnitt 102 hinaus, insbesondere über den zweiten Zwischenraum hinaus, entgegengewirkt wird.

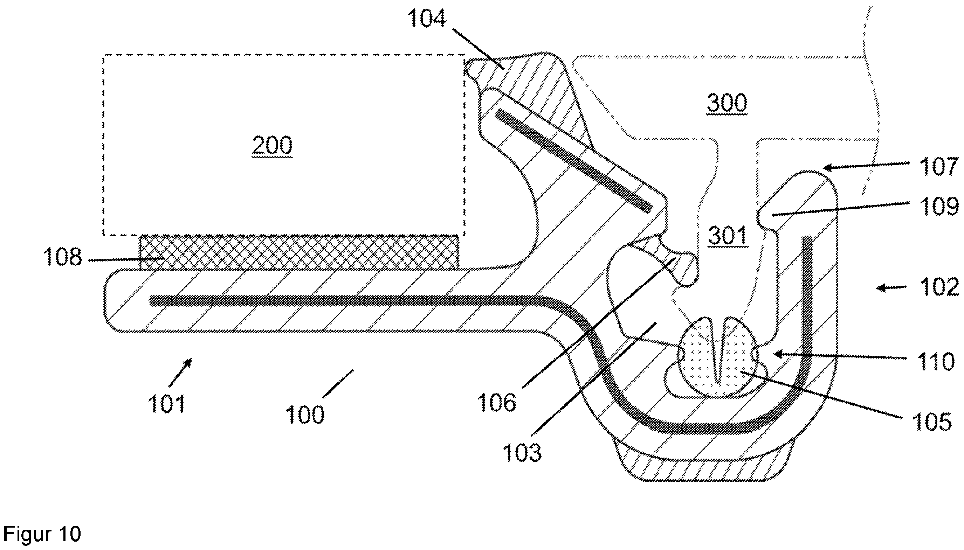

Bei den Ausführungsformen gemäß den Figuren 10, 11 oder 14 ist das zweite Auflageelement 105 im Querschnitt geschlitzt gezeigt. Der Schlitz kann entlang der gesamten Länge bzw. Erstreckung des zweiten Auflageelementes 105 vorgesehen sein. Er dient dazu, die aufzubringenden Montagekräfte beim Einführen der Bauteilrippe 301 in die Rastnut 103 zu steuern, sobald die Bauteilrippe 301 das zweite Auflageelement 105 abhängig von der Eindringtiefe berührt. Die Schlitztiefe bestimmt dabei, wie weit die Bauteilrippe 301 ohne nennenswerten Kraftaufwand in das zweite Auflageelement 105 eindringen kann. Je nach verwendetem Material für das zweite Auflageelement 105 umschließt dieses vorzugsweise die Bauteilrippe 301 während des Eindringens und verbessert damit zusätzlich den angestrebten Abdichteffekt. Im Rahmen des erfindungsgemäßen Verfahrens könnte dieser Schlitz vorgesehen werden, nachdem das zweite Auflageelement 105 am Einrastabschnitt 102 vorgesehen wurde oder während das zweite Auflageelement 105 am Einrastabschnitt 102 vorgesehen wird.

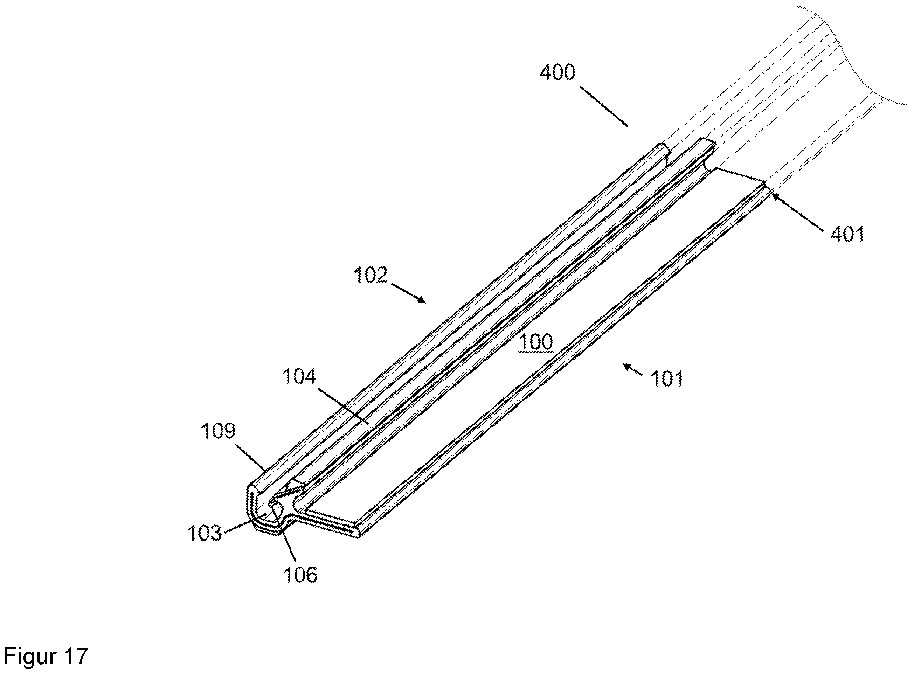

Figur 17 zeigt einen mittels Extrusion oder Strangpressen hergestellten Profilstrang 400 als Ausgangsprodukt für die Herstellung der Nutleiste 100. Sämtliche oben erläuterten Eigenschaften und Merkmale der Nutleiste 100 können bereits am Profilstrang 400 vorgesehen werden bzw. vom Profilstrang 400 umfasst sein. Selbst die Anbringung zumindest eines ersten stirnseitigen Rastnutverschlusses 105' kann bereits am Profilstrang 400 vorgesehen werden, während der zweite gegenüberliegende stirnseitigen Rastnutverschluss 105" erst nach Abtrennung eines Profilstrangabschnittes 100 vom Profilstrang 400 erfolgen kann, um ein Endprodukt gemäß den Figuren 1 bis 3 zu erhalten.

Der Profilstrang 400 umfasst mindestens jedoch einen sich entlang des Profilstrangs 400 erstreckenden Befestigungsabschnitt 101, welcher an einem Bauteilkonturabschnitt eines ersten Bauteils (nicht gezeigt, siehe hierzu Figuren 4 bis 16) anordenbar ist. Der Befestigungsabschnitt 101 umfasst ein erstes Auflageelement 104 für ein erstes und/oder ein zweites Bauteil (nicht gezeigt, siehe hierzu Figuren 1 bis 16). Der Profilstrang 400 umfasst weiter einen sich entlang des Profilstrangs 400 erstreckenden Einrastabschnitt 102 mit einer Rastnut 103 zur Aufnahme einer vom zweiten Bauteil umfassten Rastrippe (nicht gezeigt, siehe hierzu Figuren 1 bis 16). Befestigungsabschnitt 101 und Einrastabschnitt 102 werden bevorzugt einstückig realisiert und vorzugsweise werden bei der Herstellung dieselben Materialien verwendet (z.B. PP, PVC, ABS, PA). Am scheibenseitigen ersten Schenkel der Rastnut 103 (jeweils links im Bild, Figuren 1 bis 16) wird ein, z.B. weichelastisches (z.B. mit einem TPE als Werkstoffbasis) oder ein hartes (z.B. mit PP, PVC, ABS als Werkstoffbasis), erstes Rastelement 106 vorgesehen. Am gegenüberliegenden zweiten Schenkel der Rastnut 103 (rechts im Bild, Figuren 1 bis 16) kann ein, z.B. weichelastisches (z.B. mit einem TPE als Werkstoffbasis) oder hartes (z.B. mit PP, PVC, ABS als Werkstoffbasis), zweites Rastelement 109 vorgesehen werden, so dass die Rastrippe mit der Rastnut 103 form- und/oder kraftschlüssig verrastbar bzw. festlegbar ist. Die Rastnut 103 bildet somit einen Klemmkanal für die oben genannte Rastrippe 301 des zweiten Bauteils 300.

Die Nutleiste 100 wird aus dem Profilstrang 400 gewonnen, indem bei Erreichen einer vorgebbaren Profilstranglänge ein Profilstrangabschnitt 100 vom Profilstrang 400 abgetrennt wird 401 (z.B. Sägen, Stanzen oder Schneiden).

Am Einrastabschnitt 102 wird im Rahmen der Herstellung der erfindungsgemäßen Nutleiste 100 vor und/oder nach dem Abtrennvorgang 401 ein zweites, vorzugsweise abdichtendes, Auflageelement (nicht gezeigt, siehe hierzu Figuren 1 bis 16) für das zweite Bauteil vorgesehen, beispielsweise mittels Extrusion oder eines sonstigen geeigneten Vorgehens (z.B. ausschließliches oder zusätzliches stirnseitiges Aufkleben von Abdichtfolien für die offenen Rastnutenden).

Sämtliche oder einzelne Abschnitte der Nutleiste 100, sowohl in Längs- als auch in Querrichtung betrachtet, können durchgehende oder abschnittsweise Armierungen umfassen, insbesondere der Befestigungsabschnitt 101 und/oder der Einrastabschnitt 102. Diese Armierungen werden bevorzugt während der Herstellung der Abschnitte 101, 102 (z.B. mittels Ko-Extrusion) in das Abschnittmaterial eingebracht, können jedoch auch nachträglich vorgesehen werden.

Auch können, insbesondere am Einrastabschnitt 102, Oberflächenbehandlungen vorgenommen werden, um die Oberflächenenergie zu beeinflussen. Diesbezüglich wird an dieser Stelle auf die Beschreibung weiter oben verwiesen.

Bezugszeichenliste

| 100 | Nutleiste mit Befestigungsabschnitt 101 und Einrastabschnitt 102, Profilstrangabschnitt |
| 101 | Befestigungsabschnitt mit Klebeband 108 für das erste Bauteil 200 |
| 102 | Einrastabschnitt mit Klemmkanal bzw. Rastnut 103 für das zweite Bauteil 300 |
| 103 | Rastnut mit zwei stirnseitig offenen Rastnutenden |
| 104 | erstes Auflageelement für das erste und/oder zweite Bauteil 200, 300 |
| 105 | zweites abdichtendes Auflageelement für das zweite Bauteil 300 |
| 105', 105" | abdichtende Auflageelementabschnitte als Rastnutendverschluss |
| 106 | (erstes) Rastelement, vorzugsweise mit Nutleistenrohrkörper koextrudiert |
| 107 | Auflage für die Unterseite des zweiten Bauteils 300 |
| 108 | doppelseitiges Klebeband zur Befestigung des ersten Bauteils 200 |
| 109 | optionale Hinterschneidung, insbesondere als (zweites) Rastelement |
| 110 | optionale Aufnahmenut für das zweite Auflageelement 105 |
| 111 | optionale Klebeschicht zur Befestigung des zweiten Auflageelementes 105 |
| 112', 112" | Auflagelaschen für die Unterseite des zweiten Bauteils 300 (Figur 1 bis 3) |
| 200 | erstes Bauteil (in Figur 1 bis 3 nicht gezeigt, sonst grob schematisch angedeutet) |
| 300 | zweites Bauteil (in den Figuren 1 bis 16 grob schematisch angedeutet) |
| 301 | Rastrippe als Bestandteil des zweiten Bauteils 300 (bevorzugt einstückig) |
| 302 | optionaler Vorsprung zur Stabilisierung der Rastnutendverschlüsse 105', 105" |
| 400 | vorzugsweise extrudierter Profilstrang (Querschnitt wie Nutleistenquerschnitt) |
| 401 | Abtrennvorgang am Profilstrang 400 nach Erreichen einer vorgebbaren Profilstranglänge |
| D | Materialdicke des zweiten Auflageelements 105 im unverformten Ausgangszustand |
| D' | Materialdicke des zweiten Auflageelements 105 in einem Zwischenzustand im Zuge der Montage des zweiten Bauteils 300 |
| D" | Materialdicke des zweiten Auflageelements 105 im Montagezustand nach Montage des zweiten Bauteils 300 |
| M | Montagerichtung des zweiten Bauteils 300 |

**Patentansprüche**

1. Nutleiste (100) zum Verbinden eines ersten Bauteils (200) mit einem zweiten Bauteil (300), umfassend einen sich entlang der Nutleiste (100) erstreckenden Befestigungsabschnitt (101) mit einem ersten Auflageelement (104) für das erste und/oder das zweite Bauteil (200, 300), welcher an einem Bauteilkonturabschnitt des ersten Bauteils (200) anordenbar ist, und umfassend einen sich entlang der Nutleiste (100) erstreckenden Einrastabschnitt (102) mit einer an beiden Enden der Nutleiste (100) offenen Rastnut (103) zur Aufnahme einer vom zweiten Bauteil (300) umfassten Rastrippe (301), wobei am Einrastabschnitt (102) ein zweites, vorzugsweise abdichtendes, Auflageelement (105, 105', 105") für das zweite Bauteil (300) vorgesehen ist und wobei von der Rastnut (103) mindestens ein Rastelement (106, 109) umfasst ist, mittels dessen die Rastrippe (301) mit der Rastnut (103) form- und/oder kraftschlüssig festlegbar ist, so dass das zweite Bauteil (300) und/oder seine Rastrippe (301) am zweiten Auflageelement (105, 105', 105") anliegt, **dadurch gekennzeichnet, dass** das zweite Auflageelement (105) mehrteilig ausgebildet ist, wobei ein erster Auflageelementabschnitt (105') zur stirnseitigen Abdichtung der Rastnut (103) an einer ersten Stirnseite der Rastnut (103) vorgesehen ist und wobei ein zweiter Auflageelementabschnitt (105") zur stirnseitigen Abdichtung der Rastnut (103) an einer zweiten Stirnseite der Rastnut (103) vorgesehen ist.

2. Nutleiste nach Anspruch 1, **dadurch gekennzeichnet, dass** sich ein weiteres zweites Auflageelement (105) entlang des Einrastabschnittes (102) erstreckt.

3. Nutleiste nach Anspruch 2, **dadurch gekennzeichnet, dass** das weitere zweite Auflageelement (105) an einem Rastnutboden angeordnet ist und diesen bevorzugt vollständig bedeckt.

4. Nutleiste nach Anspruch 2 oder 3, **dadurch gekennzeichnet, dass** entlang des Einrastabschnittes (102) eine Aufnahmenut (110) zur Aufnahme des weiteren zweiten Auflageelementes (105) vorgesehen ist.

5. Nutleiste nach Anspruch 4, **dadurch gekennzeichnet, dass** die Aufnahmenut (110) außerhalb und/oder innerhalb der Rastnut (103), bevorzugt an einem Rastnutschenkel und/oder am Rastnutboden, angeordnet ist.

6. Nutleiste nach Anspruch 4 oder 5, **dadurch gekennzeichnet, dass** sich das weitere zweite Auflageelement (105) innerhalb der Aufnahmenut (110) erstreckt.

7.  Nutleiste nach einem der Ansprüche 2 bis 6, **dadurch gekennzeichnet, dass** das weitere zweite Auflageelement (105) einen zumindest teilweise elastisch verformbaren Schaum, bevorzugt einen PUR-Schaum, besonders bevorzugt einen Einkomponenten-PUR-Schaum, umfasst.

8.  Nutleiste nach Anspruch 7, **dadurch gekennzeichnet, dass** das weitere zweite Auflageelement (105) im Zuge einer Montage des zweiten Bauteils (300) an der Nutleiste (100) und/oder in einem Montagezustand, in welchem das zweite Bauteil (300) mit der Nutleiste (100) gefügt ist, zumindest abschnittweise eine Kompression von 10% bis 91% erfährt.

9.  Nutleiste nach Anspruch 1, **dadurch gekennzeichnet, dass** der erste Auflageelementabschnitt (105') mit der ersten Stirnseite der Rastnut (103) verbunden ist und dass der zweite Auflageelementabschnitt (105") mit der zweiten Stirnseite der Rastnut (103) verbunden ist.

10. Anordnung, umfassend eine Nutleiste nach einem der Ansprüche 2 bis 8 und ein zweites Bauteil (300) mit einer Rastrippe (301), **dadurch gekennzeichnet, dass** die Rastrippe (301) des zweiten Bauteils (300) gleichzeitig am Rastelement (106, 109) und am weiteren zweiten Auflageelement (105) anliegt.

11. Verfahren zur Herstellung einer Nutleiste (100), insbesondere einer Nutleiste (100) nach einem der vorhergehenden Vorrichtungsansprüche, wobei mittels Extrusion oder mittels Strangpressen ein Profilstrang (400) erzeugt wird, umfassend einen sich entlang des Profilstrangs (400) erstreckenden Befestigungsabschnitt (101) mit einem ersten Auflageelement (104) für ein erstes und/oder ein zweites Bauteil (200, 300), welcher an einem Bauteilkonturabschnitt des ersten Bauteils (200) anordbar ist, und umfassend einen sich entlang des Profilstrangs (400) erstreckenden Einrastabschnitt (102) mit einer Rastnut (103) zur Aufnahme einer vom zweiten Bauteil (300) umfassten Rastrippe (301), wobei am Einrastabschnitt (102) ein zweites, vorzugsweise abdichtendes, Auflageelement (105, 105', 105") für das zweite Bauteil (300) vorgesehen wird und wobei an der Rastnut (103) mindestens ein Rastelement (106, 109) vorgesehen wird, mittels dessen die Rastrippe (301) mit der Rastnut (103) form- und/oder kraftschlüssig festlegbar ist, so dass das zweite Bauteil (300) und/oder seine Rastrippe (301) am zweiten Auflageelement (105, 105', 105") anliegt, **dadurch gekennzeichnet, dass** bei Erreichen einer vorgebbaren Profilstranglänge ein Profilstrangabschnitt (100) vom Profilstrang (400) abgetrennt (401) wird und dass das zweite Auflageelement (105) mehrteilig ausgebildet wird, wobei ein erster Auflageelementabschnitt (105') zur stirnseitigen Abdichtung der Rastnut (103) an einer ersten Stirnseite der Rastnut befestigt wird und wobei ein zweiter Auflageelementabschnitt (105") zur stirnseitigen Abdichtung der Rastnut (103) an einer zweiten Stirnseite der Rastnut (103) befestigt wird, vorzugsweise mittels eines Klebe- und/oder eines Schweißvorgangs.

12. Verfahren nach Anspruch 11, **dadurch gekennzeichnet, dass** ein weiteres zweites Auflageelement (105) entlang des Einrastabschnittes (102) vorgesehen wird.

13. Verfahren nach Anspruch 12, **dadurch gekennzeichnet, dass** am Einrastabschnitt (102) eine Aufnahmenut (110) zur Aufnahme des weiteren zweiten Auflageelementes (105) vorgesehen wird, innerhalb welcher das weitere zweite Auflageelement (105) angeordnet wird.

14. Verfahren nach Anspruch 12 oder 13, **dadurch gekennzeichnet, dass** das weitere zweite Auflageelement (105) gleichzeitig mit dem Profilstrang (400) hergestellt wird.

15. Verfahren nach einem der Ansprüche 12 bis 14, **dadurch gekennzeichnet, dass** für das weitere zweite Auflageelement (105) ein Schaumstoff oder ein aufschäumender oder aufgeschäumter Werkstoff oder ein Schaumband verwendet wird.

16. Verfahren nach einem der vorhergehenden Verfahrensansprüche, **dadurch gekennzeichnet, dass** die Extrusion eine Kunststoffextrusion ist und dass bevorzugt zumindest eines der Auflageelemente (104, 105) mittels Ko-Extrusion und/oder mittels Post-Koextrusion am Profilstrang (400) angeordnet wird.

17. Verfahren nach einem der Ansprüche 12 bis 16, **dadurch gekennzeichnet, dass** das weitere zweite Auflageelement (105) an einem Rastnutboden des Profilstrangs (400) vorgesehen wird, wobei optional der Profilstrang (400) zumindest teilweise erwärmt wird und/oder wobei optional die Rastnut (103) zumindest teilweise einer adhäsionserhöhenden Oberflächenvorbehandlung unterzogen wird, insbesondere einer Plasmabehandlung.

**Claims**

1.  A grooved strip (100) for connecting a first component (200) to a second component (300), comprising

    a fastening section (101) extending along the grooved strip (100) and having a first bearing element (104) for the first and/or the second component (200, 300), which fastening section (101) is configured to be arranged on a component contour section of the first component (200), and comprising

    a latching section (102) extending along the grooved strip (100) and having a latching groove (103) which is open at both ends of the grooved strip (100) and which is configured to receive a latching rib (301) which is comprised by the second component (300), wherein

    a second, preferably sealing, bearing element (105, 105', 105") for the second component (300) is provided, and wherein

    at least one latching element (106, 109) is comprised by the latching groove (103), by means of which latching element (106, 109) the latching rib (301) can be fastened to the latching groove (103) in a form-fitting and/or force-fitting manner, so that the second component (300) and/or its latching rib (301) bears against the second bearing element (105, 105', 105"),

    **characterized in that** the second bearing element (105) is formed in several parts, wherein a first bearing element section (105') for face-side sealing of the latching groove (103) is provided on a first end face of the latching groove (103), and wherein a second bearing element section (105") for face-side sealing of the latching groove (103) is provided on a second end face of the latching groove (103).

2.  The grooved strip according to claim 1, **characterized in that** a further second bearing element (105) extends along the latching section (102).

3.  The grooved strip according to claim 2, **characterized in that** the further second bearing element (105) is arranged on a latching groove bottom and preferably completely covers the latching groove bottom.

4.  The grooved strip according to claim 2 or 3, **characterized in that** a receiving groove (110) configured to receive the further second bearing element (105) is provided along the latching section (102).

5.  The grooved strip according to claim 4, **characterized in that** the receiving groove (110) is arranged outside and/or inside the latching groove (103), preferably on a latching groove leg and/or on the latching groove bottom.

6.  The grooved strip according to claim 4 or 5, **characterized in that** the further second bearing element (105) extends inside the receiving groove (110).

7.  The grooved strip according to any one of claims 2 to 6, **characterized in that** the further second bearing element (105) comprises an at least partially elastically deformable foam, preferably a PUR foam, particularly preferably a one-component PUR foam.

8.  The grooved strip according to claim 7, **characterized in that** the further second bearing element (105) undergoes, at least in sections, a compression of 10% to 91% in the course of an assembly of the second component (300) to the grooved strip (100) and/or in an assembled state in which the second component (300) is joined to the grooved strip (100).

9.  The grooved strip according to claim 1, **characterized in that** the first bearing element section (105') is connected to the first end face of the latching groove (103) and that the second bearing element section (105") is connected to the second end face of the latching groove (103).

10. An arrangement comprising a grooved strip according to any one of claims 2 to 8 and a second component (300) having a latching rib (301), **characterized in that** the latching rib (301) of the second component (300) simultaneously bears against the latching element (106, 109) and against the further second bearing element (105).

11. A method for the production of a grooved strip (100), in particular a grooved strip (100) according to one of the preceding device claims, wherein a profiled strand (400) is produced by means of extrusion or by means of bar extrusion, the profiled strand (400) comprising

    a fastening section (101) extending along the profiled strand (400) and having a first bearing element (104) for a first and/or a second component (200, 300), which fastening section (101) is arrangeable on a component contour section of the first component (200), and comprising

a latching section (102) extending along the profiled strand (400) and having a latching groove (103) configured to receive a latching rib (301) which is comprised by the second component (300), wherein

a second, preferably sealing, bearing element (105, 105', 105") for the second component (300) is provided on the latching section (102), and wherein

at least one latching element (106, 109) is provided on the latching groove (103), by means of which latching element (106, 109) the latching rib (301) can be fastened to the latching groove (103) in a form-fitting and/or force-fitting manner, so that the second component (300) and/or its latching rib (301) bears against the second bearing element (105, 105', 105"), **characterized in that**, when a predeterminable profiled strand length is reached, a profiled strand section (100) is separated (401) from the profiled strand (400), and **in that** the second bearing element (105) is formed in several parts, wherein a first bearing element section (105') is fastened to a first end face of the latching groove (103) for face-side sealing of the latching groove (103), and wherein a second bearing element section (105") is fastened to a second end face of the latching groove (103) for face-side sealing of the latching groove (103), preferably by means of an adhesive process and/or a welding process.

12. The method according to claim 11, **characterized in that** a further second bearing element (105) is provided along the latching section (102).

13. The method according to claim 12, **characterized in that** a receiving groove (110) configured to receive the further second bearing element (105) is provided on the latching section (102), inside which receiving groove (110) the further second bearing element (105) is arranged.

14. The method according to claim 12 or 13, **characterized in that** the further second bearing element (105) is produced simultaneously with the profiled strand (400).

15. The method according to any one of claims 12 to 14, **characterized in that** a foam, or a foaming or a foamed material, or a foam tape is used for the further second bearing element (105).

16. The method according to any one of the preceding method claims, **characterized in that** the extrusion is a plastic extrusion and **in that** preferably at least one of the bearing elements (104, 105) is arranged on the profiled strand (400) by means of co-extrusion and/or by means of post co-extrusion.

17. The method according to any one of claims 12 to 16, **characterized in that** the further second bearing element (105) is provided at a latching groove bottom of the profiled strand (400), wherein optionally the profiled strand (400) is at least partially heated and/or wherein optionally the latching groove (103) is at least partially subjected to an adhesion-increasing surface pretreatment, in particular a plasma treatment.

**Revendications**

1. Baguette à rainure (100) pour relier un premier composant (200) à un deuxième composant (300), comprenant une section de fixation (101) s'étendant le long de la baguette à rainure (100) avec un premier élément d'appui (104) pour le premier et/ou le deuxième composant (200, 300), qui est apte à être agencé sur une section de contour de composant du premier composant (200), et comprenant une section d'encliquetage (102) s'étendant le long de la baguette à rainure (100) avec une rainure d'encliquetage (103) ouverte aux deux extrémités de la baguette à rainure (100) pour recevoir une nervure d'encliquetage (301) comprise par le deuxième composant (300), un deuxième élément d'appui (105, 105', 105''), de préférence étanche, étant prévu sur la section d'encliquetage (102) pour le deuxième composant (300) et la rainure de verrouillage (103) comprenant au moins un élément d'encliquetage (106, 109), au moyen duquel la nervure d'encliquetage (301) est apte à être fixée par complémentarité de forme et/ou par engagement en force avec la rainure d'encliquetage (103), de sorte que le deuxième composant (300) et/ou sa nervure d'encliquetage (301) s'appuie sur le deuxième élément d'appui (105, 105', 105''), **caractérisée en ce que** le deuxième élément d'appui (105) est réalisé en plusieurs parties, une première section d'élément d'appui (105') étant prévue pour l'étanchéité de face de la rainure d'encliquetage (103) sur un premier côté frontal de la rainure d'encliquetage (103) et une deuxième section d'élément d'appui (105'') étant prévue pour l'étanchéité de face de la rainure d'encliquetage (103) sur un deuxième côté frontal de la rainure d'encliquetage (103).

2. Baguette à rainure selon la revendication 1, **caractérisée en ce qu'**un autre deuxième élément d'appui (105) s'étend le long de la section d'encliquetage (102).

**3.** Baguette à rainure selon la revendication 2, **caractérisée en ce que** l'autre deuxième élément d'appui (105) est disposé sur un fond de rainure d'encliquetage et le recouvre de préférence entièrement.

**4.** Baguette à rainure selon la revendication 2 ou la revendication 3, **caractérisée en ce qu'**une rainure de réception (110) est prévue le long de la section d'encliquetage (102) pour recevoir l'autre deuxième élément d'appui (105).

**5.** Baguette à rainure selon la revendication 4, **caractérisée en ce que** la rainure de réception (110) est disposée à l'extérieur et/ou à l'intérieur de la rainure d'encliquetage (103), de préférence sur une branche de la rainure d'encliquetage et/ou sur le fond de la rainure d'encliquetage.

**6.** Baguette à rainure selon la revendication 4 ou la revendication 5, **caractérisée en ce que** l'autre deuxième élément d'appui (105) s'étend à l'intérieur de la rainure de réception (110).

**7.** Baguette à rainure selon l'une des revendications 2 à 6, **caractérisée en ce que** l'autre deuxième élément d'appui (105) comprend une mousse au moins partiellement déformable élastiquement, de préférence une mousse PUR, de manière particulièrement préférée une mousse PUR à un composant.

**8.** Baguette à rainure selon la revendication 7, **caractérisée en ce que** l'autre deuxième élément d'appui (105) subit au moins par sections une compression de 10 % à 91 % au cours d'un montage du deuxième composant (300) sur la baguette à rainure (100) et/ou dans un état de montage dans lequel le deuxième composant (300) est assemblé avec la baguette à rainure (100).

**9.** Baguette à rainure selon la revendication 1, **caractérisée en ce que** la première section d'élément d'appui (105') est reliée à la première face frontale de la rainure d'encliquetage (103) et **en ce que** la deuxième section d'élément d'appui (105'') est reliée à la deuxième face frontale de la rainure d'encliquetage (103).

**10.** Agencement comprenant une baguette à rainure selon l'une des revendications 2 à 8 et un deuxième composant (300) avec une nervure d'encliquetage (301), **caractérisé en ce que** la nervure d'encliquetage (301) du deuxième composant (300) est en application simultanément sur l'élément d'encliquetage (106, 109) et sur l'autre deuxième élément d'appui (105).

**11.** Procédé de fabrication d'une baguette à rainure (100), en particulier d'une baguette à rainure (100) selon l'une des revendications de dispositif précédentes, dans lequel un profilé (400) est produit par extrusion ou par filage, comprenant une section de fixation (101) s'étendant le long du profilé (400) avec un premier élément d'appui (104) pour un premier et/ou un deuxième composant (200, 300), qui est apte à être disposé sur une section de contour de composant du premier composant (200), et comprenant une section d'encliquetage (102) s'étendant le long du profilé (400) avec une rainure d'encliquetage (103) pour recevoir une nervure d'encliquetage (301) comprise par le deuxième composant (300), un deuxième élément d'appui (105, 105', 105''), de préférence étanche, étant prévu sur la section d'encliquetage (102) pour le deuxième composant (300), et au moins un élément d'encliquetage (106, 109) étant prévu sur la rainure d'encliquetage (103), au moyen duquel la nervure d'encliquetage (301) peut être fixée avec la rainure d'encliquetage (103) par complémentarité de forme et/ou par engagement en force avec la rainure d'encliquetage (103), de sorte que le deuxième composant (300) et/ou sa nervure d'encliquetage (301) s'applique contre le deuxième élément d'appui (105, 105', 105''), **caractérisé en ce que**, lorsqu'une longueur de barre profilée apte à être prédéfinie est atteinte, une section de barre profilée (100) est séparée (401) du profilé (400) et **en ce que** le deuxième élément d'appui (105) est réalisé en plusieurs parties, une première section d'élément d'appui (105') étant fixée sur une première face frontale de la rainure d'encliquetage (103) pour assurer l'étanchéité frontale de la rainure d'encliquetage et une deuxième section d'élément d'appui (105'') étant fixée sur une deuxième face frontale de la rainure d'encliquetage (103) pour assurer l'étanchéité frontale de la rainure d'encliquetage (103), de préférence au moyen d'une opération de collage et/ou de soudage.

**12.** Procédé selon la revendication 11, **caractérisé en ce qu'**un autre deuxième élément d'appui (105) est prévu le long de la section d'encliquetage (102).

**13.** Procédé selon la revendication 12, **caractérisé en ce qu'**une rainure de réception (110) destinée à recevoir l'autre deuxième élément d'appui (105) est prévue sur la section d'encliquetage (102), à l'intérieur de laquelle l'autre deuxième élément d'appui (105) est disposé.

**14.** Procédé selon la revendication 12 ou la revendication 13, **caractérisé en ce que** l'autre deuxième élément d'appui (105) est fabriqué en même temps que le profilé (400).

**15.** Procédé selon l'une des revendications 12 à 14, **caractérisé en ce que** l'on utilise pour l'autre deuxième élément d'appui (105) une mousse ou un matériau moussant ou expansé ou une bande de mousse.

**16.** Procédé selon l'une des revendications de procédé précédentes, **caractérisé en ce que** l'extrusion est une extrusion de matière plastique et **en ce que**, de préférence, au moins l'un des éléments d'appui (104, 105) est disposé sur le profilé (400) par coextrusion et/ou par post-coextrusion.

**17.** Procédé selon l'une des revendications 12 à 16, **caractérisé en ce que** l'autre deuxième élément d'appui (105) est prévu sur un fond de rainure d'encliquetage du profilé (400), le profilé (400) étant optionnellement chauffé au moins partiellement et/ou la rainure d'encliquetage (103) étant optionnellement soumise au moins partiellement à un prétraitement de surface augmentant l'adhérence, en particulier un traitement au plasma.

Figur 1

108  104

112'

300

101

105'

100

112''

102

105''

104

300

112''

109

108

105''

101

301

100    106    103

102

Figur 2

Figur 3

Figur 4

EP 3 911 530 B1

Figur 5

EP 3 911 530 B1

Figur 6

EP 3 911 530 B1

Figur 7

EP 3 911 530 B1

Figur 8

EP 3 911 530 B1

EP 3 911 530 B1

104

200

300

107

108

109

101

301

102

100

106

103

105

110

Figur 9

Figur 10

Figur 11

Figur 12

Figur 13a

Figur 13b

Figur 13c

29

Figur 14

EP 3 911 530 B1

Figur 15

EP 3 911 530 B1

Figur 16

Figur 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202008013133 U1
- DE 102012112663 A1
- JP 2015205656 A
- JP 2015157527 A
- CN 104890483 B